(19) Europäisches Patentamt / European Patent Office / Office européen des brevets

(11) **EP 4 047 126 B1**

(12) **EUROPEAN PATENT SPECIFICATION**

(45) Date of publication and mention
of the grant of the patent:
**11.12.2024 Bulletin 2024/50**

(21) Application number: **21744815.8**

(22) Date of filing: **19.01.2021**

(51) International Patent Classification (IPC):
**D06M 15/53** (2006.01)   **D06M 13/188** (2006.01)
**D06M 13/224** (2006.01)   **D06M 13/256** (2006.01)
**D06M 13/262** (2006.01)   **D06M 13/342** (2006.01)
**D06M 101/40** (2006.01)

(52) Cooperative Patent Classification (CPC):
**D06M 15/53; C08J 5/06; D06M 13/188;**
**D06M 13/224; D06M 13/256; D06M 13/262;**
**D06M 13/292; D06M 13/342; C08J 2365/00;**
**C08J 2371/00; D06M 2101/40; D06M 2200/40**

(86) International application number:
**PCT/JP2021/001577**

(87) International publication number:
**WO 2021/149656 (29.07.2021 Gazette 2021/30)**

(54) **SIZING-AGENT-COATED CARBON FIBER BUNDLE AND METHOD FOR MANUFACTURING SAME**

MIT SCHLICHTUNGSMITTEL BESCHICHTETES KOHLENSTOFFFASERBÜNDEL UND
VERFAHREN ZU SEINER HERSTELLUNG

FAISCEAU DE FIBRES DE CARBONE REVÊTU DE PRODUIT D'ENCOLLAGE ET SON PROCÉDÉ
DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2020 JP 2020008014
22.01.2020 JP 2020008015
29.10.2020 JP 2020181079**

(43) Date of publication of application:
**24.08.2022 Bulletin 2022/34**

(73) Proprietor: **Toray Industries, Inc.**
**Tokyo 103-8666 (JP)**

(72) Inventors:
• **YOMO, Takayuki**
**Iyo-gun, Ehime 791-3193 (JP)**
• **TAKENAKA, Misato**
**Iyo-gun, Ehime 791-3193 (JP)**
• **OKUDA, Haruki**
**Iyo-gun, Ehime 791-3193 (JP)**
• **SUEOKA, Masanori**
**Iyo-gun, Ehime 791-3193 (JP)**
• **SUZUKI, Yoshimasa**
**Iyo-gun, Ehime 791-3193 (JP)**

(74) Representative: **Prüfer & Partner mbB**
**Patentanwälte · Rechtsanwälte**
**Sohnckestraße 12**
**81479 München (DE)**

(56) References cited:
WO-A1-03/012188        WO-A1-2006/019139
JP-A- 2010 031 424     JP-A- 2017 137 603
JP-A- 2019 210 587     JP-A- H0 544 167
JP-A- H06 212 565      JP-A- H06 212 565
KR-A- 20120 085 417    US-A- 5 175 025
US-A1- 2019 390 022

**Description**

TECHNICAL FIELD

The present invention relates to a sizing agent-coated carbon fiber bundle in which the sizing agent applied has good bundle forming property and frictional property to serve for the production of a sizing agent-coated carbon fiber bundle with a high handleability and shows a high solubility in water in a water based process such as for wet powder impregnation and also relates to a production method for such a sizing agent-coated carbon fiber bundle.

BACKGROUND ART

Carbon fibers are light in weight, and yet high in strength and elastic modulus, and therefore they are generally combined with various matrix resins to provide composite materials to serve in many fields including aircraft members, spacecraft members, automobile members, ship members, civil engineering/construction materials, and sports goods. A typical composite material containing carbon fibers is in the form of a molded product produced by press-molding (a molding method that performs defoaming and shaping under pressure) a preform formed by piling up prepreg layers. Such a prepreg is commonly produced by impregnating a carbon fiber base formed mainly of continuous carbon fiber bundles aligned in one direction with resin. Composite materials formed of discontinuous carbon fibers (chopped, web, etc.) that are high in shape conformity to complicated shapes and can be molded in a short time have also been proposed, but prepregs can serve more practically in providing good structural materials in terms of mechanical properties such as specific strength and specific rigidity and the stability of such properties.

In the area of carbon fiber composite materials in recent years, there are stronger demands for molding materials that are high in formability, handleability, and suitability for production of molded products with good mechanical properties, and currently higher economic efficiency and productivity are called for in industrial fields. As one of the solutions to these requirements, studies for the development of prepregs containing thermoplastic resin as matrix resin are in progress. In a typical production process, a thermoplastic resin slurry containing powdery thermoplastic matrix resin dispersed using a surface active agent is passed through a carbon fiber tape so that the tape holds the powdery thermoplastic matrix resin and then heat and pressure are applied so that the interior of the carbon fiber tape is impregnated with the thermoplastic resin, thereby producing a prepreg.

To produce a composite material that exhibits good characteristics of the carbon fiber contained therein, it is important to maintain high handleability and prevent the winding of fuzz and breakage due to such winding of fuzz during the processing of carbon fibers. A carbon fiber bundle that is not coated with a sizing agent does not have bundle forming property and is likely to cause serious fuzz generation that can lead to accumulation of fuzz during the prepreg production step and result in deterioration in prepreg quality. To avoid this, a commonly used method is to improve the handleability of the carbon fiber bundle by coating the carbon fiber bundle with a sizing agent to form an abrasion resistant coat film on the surface of the carbon fiber (see Patent documents 1 and 2).

There is a proposal of a carbon fiber bundle that is in the form of a paper-like sheet prepared by cutting continuous fibers and disperse them as individual single fibers. Many of the processes now used to prepare paper-like sheets from carbon fiber bundles are water based processes, and in order to allow the carbon fiber bundles to exhibit their good properties, it is important to realize both of the following features during the handling in the chopping step that is performed prior to the paper making step: bundle forming property to allow the carbon fiber bundles to maintain their forms and fiber opening property to ensure fast dispersion of single fibers while preventing their recoagulation after the bundles are put in a water based medium in the paper-making process, and a sizing agent that has both good bundle forming property and high water dispersibility is applied. In general, an epoxy resin etc. are adopted as a size (sizing agent) and attached to carbon fiber bundles in many cases in order to increase their handleability, but its fiber opening capability tends to be poor in water when it is used in a water based process because of the strong interaction of the sizing agent itself and excessive interaction with the carbon fiber surface. Therefore, Patent documents 3 to 5, for example, propose techniques in which a surface active agent or a water-soluble polymer is used as sizing agent and applied to carbon fiber bundles to ensure increased handleability during their severance into chopped carbon fibers and improved fiber opening capability in water.

The feasibility of the production of a carbon fiber composite material with good properties largely depends on the properties of the interface between carbon fibers and resin. Therefore, it is important for the sizing agent existing at the interface between carbon fibers and resin to have good properties. For example, Patent document 6 proposes a technique in which a surface active agent is applied to a carbon fiber bundle followed by applying a sizing agent, which serves to allow the sizing agent to be spread uniformly, which serves to produce a carbon fiber composite material having good machine performance. In addition, Patent document 7 proposes a technique in which a spun yarn of flame resistant fiber is coated with a surface active agent to increase its affinity with powdery matrix resin in order to ensure good impregnating property in the aggregate production step.

PRIOR ART DOCUMENTS

PATENT DOCUMENTS

    Patent document 1: U.S. Patent No. 3957716
    Patent document 2: Japanese Unexamined Patent Publication (Kokai) No. SHO 57-171767
    Patent document 3: International Publication WO 2006/019139
    Patent document 4: Japanese Unexamined Patent Publication (Kokai) No. 2000-54269
    Patent document 5: Japanese Patent No. 6571892
    Patent document 6: Japanese Unexamined Patent Publication (Kokai) No. 2017-137603
    Patent document 7: Japanese Unexamined Patent Publication (Kokai) No. SHO 59-144679

Other relevant prior art documents are JP H06 212565 A, US 5 175 025 A, JP 2019 210587 A and US 2019/390022 A1.

SUMMARY OF INVENTION

PROBLEMS TO BE SOLVED BY THE INVENTION

On the other hand, in the case where a sizing agent is applied to a carbon fiber bundle with the aim of controlling its handleability or interface properties, some sizing agents, used in combination with a thermoplastic matrix resin that requires a high molding temperature, act to decrease the heat resistance of the matrix resin or deteriorate the adhesion between the carbon fibers and the matrix resin. This may lead to a CFRP that fails to have sufficiently good properties.

To explain in detail, although investigations have been made on the application of a sizing agent as a means of suppressing the generation of fuzz from carbon fiber bundles or as a means of improving the processability in a water based process, they do not have the idea of removing the sizing agent from the surface of the carbon fiber to minimize the risk of the above-mentioned influence on the thermoplastic matrix resin in a high order processing step after once applying a sizing agent to achieve both the prevention of fuzz generation due to breakage of single fibers in the carbon fiber bundles and the development of fiber opening capability in water in order to ensure that a composite material having good mechanical properties including the high strand strength inherent in the carbon fiber bundles can be produced through carbon fiber processing in a water based process.

The present invention, which was made in view of these circumstances, aims mainly to provide a sizing agent-coated carbon fiber bundle that is particularly suitable for use in combination with a thermoplastic matrix resin because even when the sizing agent-coated carbon fiber bundle is high in handleability, the sizing agent on the sizing agent-coated carbon fiber bundle has a favorable solubility in water to reduce the quantity of the sizing agent persisting thereon.

MEANS OF SOLVING THE PROBLEMS

In order to solve the above problems, the present invention provides a sizing agent-coated carbon fiber bundle that includes a carbon fiber bundle coated with polyethylene glycol and/or a surface active agent as sizing agent and satisfies all of the following requirements (i) to (iii):

    (i) the applied sizing agent accounts for 0.15 to 0.80 part by mass relative to 100 parts by mass of the sizing agent-coated carbon fiber bundle,
    (ii) the dry F-F friction coefficient is 0.39 or less, and
    (iii) the quantity of the sizing agent persisting after rinsing for 50 seconds under the conditions specified in the present Description accounts for 0.12 part by mass or less.

The production method for a sizing agent-coated carbon fiber bundle according to the present invention is a method that is designed to produce a sizing agent-coated carbon fiber bundle as described above and it includes a step for coating a carbon fiber bundle with a sizing agent containing polyethylene glycol and/or a surface active agent and a subsequent drying step for drying the sizing agent-coated carbon fiber bundle at 120°C to 260°C.

ADVANTAGEOUS EFFECTS OF THE INVENTION

The present invention serves to produce a sizing agent-coated carbon fiber bundle that is particularly suitable for use in combination with a thermoplastic matrix resin because even when the sizing agent-coated carbon fiber bundle is high in handleability, the sizing agent on the sizing agent-coated carbon fiber bundle has a favorable solubility in water to reduce the quantity of the sizing agent persisting thereon after processing.

BRIEF DESCRIPTION OF THE DRAWINGS

[Fig. 1] Fig. 1 is a diagram illustrating the evaluation method for 50 second rinsing test.
[Fig. 2] Fig. 2 is a diagram illustrating the evaluation method for 25 second rinsing test.

DESCRIPTION OF PREFERRED EMBODIMENTS

Preferred embodiments of the present invention are described below.

The sizing agent-coated carbon fiber bundle according to the present invention is a sizing agent-coated carbon fiber bundle that includes a carbon fiber bundle coated with polyethylene glycol and/or a surface active agent as sizing agent and satisfies all of the following requirements (i) to (iii):

(i) the applied sizing agent accounts for 0.15 part by mass or more and 0.80 part by mass or less relative to 100 parts by mass of the sizing agent-coated carbon fiber bundle,
(ii) the dry F-F friction coefficient is 0.39 or less, and
(iii) the quantity of the sizing agent persisting after rinsing for 50 seconds under the conditions specified in the present Description accounts for 0.12 part by mass or less relative to 100 parts by mass of the sizing agent-coated carbon fiber bundle.

As a result of studies performed by the present inventors, it was found that in the case of using a sizing agent that works to increase the handleability of a carbon fiber bundle when applied thereto, such a sizing agent existing in a sizing agent-coated carbon fiber bundle tends to decrease in solubility and the sizing agent tends to persist there and lead to a prepreg with deteriorated mechanical properties. As a solution to this problem, it was found that even in the case where a high-handleability compound is used as sizing agent, if the sizing agent used contains polyethylene glycol and/or a surface active agent, both a high handleability of the sizing agent-coated carbon fiber bundle and a favorable solubility of the sizing agent in water are realized by controlling the quantity of the sizing agent to be applied and its friction coefficient to properly adjust the quantity of the sizing agent that persists after rinsing.

It is necessary that the sizing agent used for the present invention contain polyethylene glycol and/or a surface active agent and it is also necessary that the sizing agent existing in the sizing agent-coated carbon fiber bundle satisfy specific requirements. A surface active agent as referred to herein is an anionic surface active agent, a nonionic surface active agent, or an amphoteric surface active agent.

An anionic surface active agent is a surface active agent that has an anionic hydrophilic group. In the case of a carbon fiber bundle coated with an anionic surface active agent, the sizing agent increases in solubility when put in water. As a result, the quantity of the sizing agent persisting on the carbon fiber bundle will decrease. Although the mechanism is not clearly known, it is considered that the anionic surface active agent is ionized in water and the resulting anionic hydrophilic group repels the carbon fiber surface to develop high solubility.

Useful anionic surface active agents include carboxylates, sulfonates, carboxylate-sulfonates, sulfuric acid ester salts, and phosphoric acid ester salts.

Specific examples of the carboxylates include soap, polyoxyethylene alkyl ether carboxylates, and alkyl hydroxy ether carboxylates. Specific examples of the sulfonates include alkylbenzene sulfonates, alkyl naphthalene sulfonates, alkanoylmethyl taurides, and dialkyl sulfosuccinic acid ester salts. Specific examples of the carboxylate-sulfonates include di-alkyl sulfosuccinic acid ester salts and polyoxyethylene alkyl ether di-sulfosuccinic acid ester salts. Specific examples of the sulfuric acid ester salts include higher alkyl sulfuric acid ester salts, polyoxyethylene alkyl ether sulfuric acid ester salts, sulfated oil, sulfated fatty acid esters, and sulfated olefins. Specific examples of the phosphoric acid ester salts include higher alkyl phosphoric acid ester salts, polyoxyethylene alkyl ether phosphoric acid ester salts, and dithiophosphoric acid ester salts. Examples of the cations contained in these salts include cations of alkali metals such as sodium and cations of alkaline earth metals such as calcium, of which cations of alkali metals are preferred in order to ensure high water solubility. Here, ammonium salts may be adopted instead of metal salts.

A nonionic surface active agent is a surface active agent that has a non-ionizable hydrophilic group. In the case of a carbon fiber bundle coated with polyethylene glycol and/or a nonionic surface active agent, the sizing agent increases in solubility when put in water. As a result, the quantity of the sizing agent persisting on the carbon fiber bundle will decrease. Although the mechanism is not clearly known, it is considered that the hydrophilic group portion of the polyethylene glycol and/or a nonionic surface active agent tends to interact easily with water to develop high solubility.

Examples of the nonionic surface active agent include polyoxyethylene alkyl ethers such as polyoxyethylene dodecyl ether, polyoxyethylene oleyl ether, and polyoxyethylene stearyl ether; polyoxyethylene polyoxypropylene glycol; polyoxyethylene alkyl phenyl ether; sorbitan fatty acid esters such as sorbitan monooleate, sorbitan monostearate, and sorbitan trioleate; polyoxyethylene sorbitan fatty acid esters such as polyoxyethylene sorbitan monooleate and polyoxyethylene sorbitan trioleate; polyoxyethylene glycerin fatty acid esters such as polyoxyethylene glyceryl monooleate; polyoxyethylene sorbitol fatty acid esters such as polyoxyethylene sorbitol tetraoleate; and polyethylene glycol fatty acid esters such as PEG monocaprylic acid ester, PEG monoheptyl acid ester, PEG monopelargonic acid ester, PEG monopentadecyl acid ester, PEG monopalmitic acid ester, PEG monolinoleic acid ester, PEG dilauric acid ester, PEG monooleic acid ester, PEG dioleic acid ester, PEG monostearic acid ester, PEG distearic acid ester, PEG dilauric acid ester, and PEG dilinoleic acid ester. These nonionic surface active agents may be used singly, or as a combination of two or more thereof, or in combination with PEG. Here, PEG is an abbreviation of polyethylene glycol.

When polyethylene glycol and a nonionic surface active agent are used in combination, the mixing ratio of the polyethylene glycol and the nonionic surface active agent is preferably such that the polyethylene glycol accounts for 50 parts by mass or more relative to the total quantity, i.e. 100 parts by mass, of the mixture. If the polyethylene glycol accounts for 50 parts by mass or more, the hydrophilicity of the polyethylene glycol acts to increase the solubility to allow the sizing agent to be dissolved easily in the rinsing step, leading to a decrease in the quantity of the sizing agent persisting on the carbon fiber bundle. It is more preferable for the polyethylene glycol in the mixture to account for 70 parts by mass or more relative to the total quantity, i.e., 100 parts by mass.

An amphoteric surface active agent is a surface active agent that has an anionic portion and a cationic portion in one molecule. In the case of a carbon fiber bundle coated with an amphoteric surface active agent, the sizing agent increases in solubility when put in water. As a result, the quantity of the sizing agent persisting on the carbon fiber bundle will decrease. Although the mechanism is not clearly known, it is considered that unlike other nonionic, anionic, or cationic surface active agents, the hydrophilic group portion of an amphoteric surface active agent tends to interact easily with water in a wide pH range to develop high solubility.

Such amphoteric surface active agents include amino acid type surface active agents, betaine type surface active agents, sulfobetaine type surface active agents, and amine oxide type surface active agents.

Specific examples of the amphoteric surface active agents include betaine type surface active agents such as fatty acid amidopropyl betaine, myristic acid amidopropyl betaine, lauric acid amidopropyl betaine, cocamidopropyl betaine, fatty acid amidopropyldimethylaminoacetic acid betaine, lauric acid amidopropyldimethylaminoacetic acid betaine, stearyldimethylaminoacetic acid betaine, lauryldimethylaminoacetic acid betaine, lauryldihydroxyethyl betaine, and 2-alkyl-N-carboxymethyl-N-hydroxyethyl imidazolinium betaine; sulfobetaine type surface active agents such as alkyl hydroxysulfobetaine, cocamidopropyl hydroxysulfobetaine, and lauramidopropyl hydroxysulfobetaine; amine oxide type surface active agents such as fatty acid amidopropyldimethylamine oxide, lauric acid amidopropyldimethylamine oxide, lauryldimethylamine oxide, coconut oil alkyldimethylamine oxide, dodecyldimethylamine oxide, decyldimethylamine oxide, and tetradecyldimethyl amine oxide; and amino acid type surface active agents such as alkylcarboxymethylhydroxyethyl imidazolium betaine, lauryldimethylaminoacetic acid betaine, hydrochloric acid alkyl diaminoethylglycine, and laurylaminodisodium propionate.

Whether or not a sizing agent-coated carbon fiber bundle contains polyethylene glycol and/or a surface active agent can be determined from an evaluation test in which the sizing agent is extracted with water from the sizing agent-coated carbon fiber bundle. In an available method, the sizing agent extracted with water is freeze-dried to prepare a specimen, which is then examined on the basis of a combination of structural analysis using IR spectra observed by infrared spectroscopy, proton NMR analysis of the freeze-dried specimen, and mass spectrum analysis.

For the sizing agent-coated carbon fiber bundle according to the present invention, it is necessary that the applied sizing agent account for 0.15 to 0.80 part by mass relative to 100 parts by mass of the sizing agent-coated carbon fiber bundle.

If the applied sizing agent accounts for 0.15 part by mass or more, it serves to improve the handleability of the sizing agent-coated carbon fiber bundle and depress the fuzz generation during the production and processing steps, leading to a carbon fiber bundle having high quality in terms of smoothness etc. It is more preferable that the applied sizing agent account for 0.25 part by mass more, more preferably 0.30 part by mass or more. On the other hand, if the applied sizing agent accounts for 0.80 part by mass or less, the quantity of the persisting sizing agent can be decreased in a short time, possibly leading to reduced influence on the mechanical properties of the resulting composite material. It is preferable that the applied sizing agent account for 0.60 part by mass or less, more preferably 0.45 part by mass or less.

It is necessary that the sizing agent-coated carbon fiber bundle according to the present invention have a dry F-F friction coefficient of 0.39 or less. If it is 0.39 or less, the friction between single fibers in the carbon fiber bundle is small, leading to a decrease in fuzz generation caused by the friction that occurs when the carbon fiber bundle is pulled out of a bobbin or that caused by the friction within the bundle when it comes into contact with metal bars. It is more preferably 0.36 or less and still more preferably 0.30 or less. On the other hand, it is preferably 0.15 or more. If it is less than 0.15, there will be little force operating on single fibers, possibly leading to deterioration in the bundle forming property. The dry F-F friction coefficient can be properly adjusted by controlling the roughness of the carbon fiber surface and the type and quantity of the anionic surface active agent contained in the sizing agent, or more simply by changing the temperature for drying performed after the application of a sizing agent. Its adjustment can be achieved also by controlling the quantity of the sizing agent to be applied. The procedure to be used for the present invention to determine the dry F-F friction coefficient will be described in the section EXAMPLES.

<Calculation method for quantity of sizing agent persisting after rinsing for 50 seconds>

For the sizing agent-coated carbon fiber bundle according to the present invention, it is necessary that the sizing agent account for 0.12 part by mass or less after rinsing for 50 seconds. A longer rinsing time is more preferable because it serves to decrease the quantity of the persisting sizing agent, and accordingly, the surface functional groups on the carbon fiber can make a greater contribution to the physical properties of the matrix resin, thereby realizing improved mechanical properties. If the quantity is 0.12 part by mass or less, the influence of the sizing agent on the matrix resin decreases, and accordingly, the surface functional groups on the carbon fiber can make a greater contribution to the physical properties of the matrix resin, thereby realizing improved mechanical properties. It is preferably 0.08 part by mass or less and more preferably 0.06 part by mass or less.

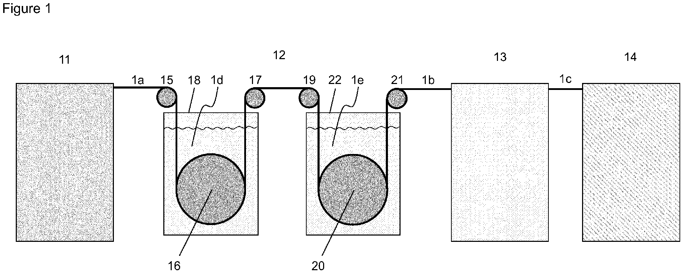

Here, 50 second rinsing of the sizing agent-coated carbon fiber bundle as specified for the present invention can be carried out by the procedure described below. The sizing agent-coated carbon fiber bundle is guided by rollers and introduced into water to allow the sizing agent to be dissolved in water. This rinsing procedure is illustrated in Fig. 1. Here, rinsing of the sizing agent-coated carbon fiber bundle can be carried out according to the procedure described below. A sizing agent-coated carbon fiber bundle 1a sent out from an unwinding step 11 is guided through a rinsing step 12 by a free roller 15 installed before the rinsing tank, a free roller 16 installed in the rinsing tank, and a free roller 17 installed after the rinsing tank so that it is passed through water 1d in a rinsing tank 18 and then guided similarly by a free roller 19 installed before the rinsing tank, a free roller 20 installed in the rinsing tank, and a free roller 21 installed after the rinsing tank so that it is passed through water 1e in another rinsing tank 22, and subsequently it is passed continuously though a drying step 13 to remove water and wound up in a winding step 14. The water temperature is 25°C; the tension for unwinding from the creel is 800 g; the passing speed through the steps is 2.4 m/min; the diameter of the free rollers in the rinsing tanks is 150 mm; and the contact angle between the sizing agent-coated carbon fiber bundle and the free rollers in the rinsing tanks is $\pi$ rad. In addition, the water level is adjusted so that the underwater passage time is 25 seconds in each rinsing tank, totaling 50 seconds for the two rinsing tanks. Contactless drying is performed in the drying step, and the rinsed sizing agent-coated carbon fiber bundle 1b is dried at a drying temperature of 150°C for 1 minute to provide a rinsed and dried sizing agent-coated carbon fiber bundle 1c. The quantity of the applied sizing agent persisting in this rinsed and dried sizing agent-coated carbon fiber bundle 1c is measured to provide a value to represent the quantity of the sizing agent.

<Calculation method for quantity of sizing agent persisting after rinsing for 25 seconds>

For the sizing agent-coated carbon fiber bundle according to the present invention, it is preferable that the sizing agent account for 0.12 part by mass or less after rinsing for 25 seconds. If the quantity is 0.12 part by mass or less, the influence of the sizing agent on the matrix resin decreases, and accordingly, the surface functional groups on the carbon fiber can make a greater contribution to the physical properties of the matrix resin, thereby realizing improved mechanical properties. The quantity is more preferably 0.08 mass% or less.

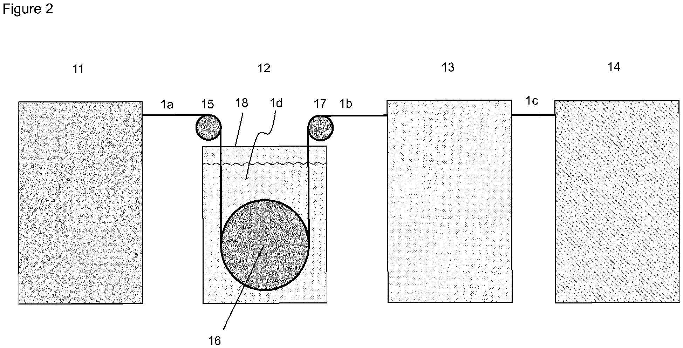

Here, the 25 second rinsing of the sizing agent-coated carbon fiber bundle required for the present invention can be carried out by the procedure described below. The sizing agent-coated carbon fiber bundle is guided by rollers and introduced into water to allow the sizing agent to be dissolved in water. This rinsing procedure is illustrated in Fig. 2. A sizing agent-coated carbon fiber bundle 1a sent out from an unwinding step 11 is guided through a rinsing step 12 by a free roller 15 installed before the rinsing tank, a free roller 16 installed in the rinsing tank, and a free roller 17 installed after the rinsing tank so that it is passed through water 1d in a rinsing tank 18, and subsequently it is passed continuously though a drying step 13 to remove water and wound up in a wind-up step 14. The water temperature is 25°C; the tension for unwinding from the creel is 800 g, the passing speed through the step is 2.4 m/min, the diameter of the free rollers in the rinsing tanks is 150 mm, and the contact angle between the sizing agent-coated carbon fiber bundle and the free roller in the rinsing tank is $\pi$ rad. In addition, the water level is adjusted so that the underwater passage time is 25 seconds. Contactless drying is performed in the drying step, and the rinsed sizing agent-coated carbon fiber bundle 1b is dried at a drying temperature of 150°C for 1 minute to provide a rinsed and dried sizing agent-coated carbon fiber bundle 1c. The quantity of the applied sizing agent persisting in this rinsed and dried sizing agent-coated carbon fiber bundle 1c is measured to provide a value to represent the quantity of the sizing agent.

For the sizing agent-coated carbon fiber bundle according to the present invention, it is preferable that the wet F-M friction coefficient be 0.28 or less. In the water based process for thermoplastic matrix resin impregnation in which a sizing agent-coated carbon fiber bundle is impregnated with thermoplastic matrix resin in a water based solvent, significant abrasion is caused by guide bars and rollers not only in the air but also in water, possibly bringing about fuzz generation. It is preferably 0.28 or less because in that case, the friction occurring between the SUS304 stainless steel and fibers will be smaller, possibly leading to decreased fuzz generation caused by abrasion. It is preferably 0.27 or less and more preferably 0.25 or less. For the present invention, a friction coefficient evaluation is made using SUS304 stainless steel with a surface roughness of 0.8 to 1 S. The friction coefficient between fiber and SUS304 stainless steel can be properly adjusted by controlling the roughness of the carbon fiber surface and the type and quantity of the anionic surface active agent contained in the sizing agent, or more simply by changing the temperature for drying performed after the application of a sizing agent. Its adjustment can be achieved also by controlling the quantity of the sizing agent to be applied. The procedure to be used for the present invention to determine the fiber-SUS304 stainless steel friction coefficient will be described in the section EXAMPLES.

For the sizing agent used for the present invention, it is preferable that the anionic surface active agent, polyethylene glycol, nonionic surface active agent, and amphoteric surface active agent each have a weight average molecular weight Mw of 150 or more and 5,000 or less. Here, the weight average molecular weight Mw referred to above is measured by gel permeation chromatography (hereinafter abbreviated as GPC) using polyethylene glycol as reference material. With an increasing Mw, the viscosity increases, and accordingly, the rate of its dissolution from the carbon fiber surface decreases.

If the Mw is 5,000 or less, the viscosity, which is an indicator of the mobility of the anionic surface active agent, polyethylene glycol, nonionic surface active agent, or amphoteric surface active agent, decreases, and the entanglement of molecular chains will decrease during their dissolution in water, leading to an increase in the solubility of the anionic surface active agent, polyethylene glycol, nonionic surface active agent, or amphoteric surface active agent in water. The value of Mw is preferably 600 or less and more preferably 500 or less. From the viewpoint of coating, on the other hand, a larger value of Mw serves to depress the evaporation of the sizing agent in the coating step. In regard to the lower limit, the value of Mw is preferably 150 or more and more preferably 200 or more. The weight average molecular weight Mw of the anionic surface active agent, polyethylene glycol, nonionic surface active agent, or amphoteric surface active agent existing in a sizing agent-coated carbon fiber bundle can be determined based on results of GPC analysis of the sizing agent extracted with water from the sizing agent-coated carbon fiber bundle in combination with results of metal element identification performed by XPS or other elemental analysis methods.

For the sizing agent used for the present invention, it is preferable that the total quantity of the surface active agent account for 70 parts by mass or more relative to the total quantity, i.e. 100 parts by mass, of the sizing agent and also that the anionic surface active agent, polyethylene glycol, nonionic surface active agent, and/or amphoteric surface active agent account for 50 parts by mass or more relative to the total quantity, i.e. 100 parts by mass, of the surface active agents.

If the total quantity of the surface active agent accounts for 70 parts by mass or more, the hydrophilic groups in the surface active agent act to increase the solubility to allow the sizing agent to be dissolved easily in the rinsing step, leading to a decrease in the quantity of the sizing agent persisting on the carbon fiber bundle. It is preferably 85 parts by mass or more and more preferably 95 parts by mass or more. Furthermore, if the polyethylene glycol and/or nonionic surface active agent account for 50 parts by mass or more relative to the total quantity of the surface active agent, the hydrophilic group portions of the polyethylene glycol and/or nonionic surface active agent are likely to interact easily with water to allow the sizing agent to be dissolved easily in the rinsing step, leading to a decrease in the quantity of the sizing agent persisting on the carbon fiber bundle.

For the sizing agent used for the present invention, it is preferable that the hydrophilic-lipophilic balance (HLB) of the nonionic surface active agent be 15 or more and 20 or less or that the HLB be 12 or more and less than 15 while the chain-end hydroxyl group ratio is 50% or more. The HLB value as defined for the present invention is calculated from the molecular structure according to the Griffin's method described in "Shin Kaimen Kasseizai Nyumon (An introduction to Surface Active Agent, New ed.)" p.128 (1992). If the HLB of the nonionic surface active agent accounts for 15 or more and 20 or less, the hydrophilicity of the nonionic surface active agent increases to allow the sizing agent to be dissolved easily in the rinsing step, leading to a decrease in the quantity of the sizing agent persisting on the carbon fiber bundle. The HLB is preferably 16 or more. Even in the case where the HLB is 12 or more and less than 15, furthermore, if the chain-end hydroxyl group ratio is 50% or more, the hydrophilicity of the terminal portions acts to increase the solubility of the nonionic surface active agent in water to allow the sizing agent to be dissolved easily in the rinsing step, leading to a decrease in the quantity of the sizing agent persisting on the carbon fiber bundle.

For the sizing agent used for the present invention, it is preferable that the polyethylene glycol and/or nonionic surface active agent have a weight average molecular weight Mw of 300 or more and 5,000 or less. Here, the weight average molecular weight Mw referred to above is measured by gel permeation chromatography (hereinafter abbreviated as GPC) using polyethylene glycol as reference material. With an increasing Mw, the viscosity of the polyethylene glycol and/or nonionic surface active agent increases, and accordingly, the rate of their dissolution from the carbon fiber surface decreases. If the value of Mw is 5,000 or less, the viscosity, which is an indicator of mobility of the polyethylene glycol and/or nonionic surface active agent, decreases, and the entanglement of molecular chains will decrease during their dissolution in water, leading to an increase in the solubility of the polyethylene glycol and/or nonionic surface active agent in water. The value of Mw is preferably 2,000 or less and more preferably 1,000 or less. From the viewpoint of coating, on the other hand, a larger value of Mw serves to depress the evaporation of the sizing agent in the coating step. In regard to the lower limit, the value of Mw is preferably 300 or more. The molecular weight of the polyethylene glycol and/or nonionic surface active agent existing in the sizing agent-coated carbon fiber bundle can be determined based on GPC analysis of the sizing agent extracted with water from the sizing agent-coated carbon fiber bundle.

In addition, if an anionic surface active agent accounts for 50 parts by mass or more relative to the total quantity of the surface active agent, the hydrophilic group in the anion of the anionic surface active agent repel the carbon fiber surface to increase the solubility to allow the sizing agent to be dissolved easily in the rinsing step, leading to a decrease in the quantity of the sizing agent persisting on the carbon fiber bundle.

In addition, another component may also be contained in addition to polyethylene glycol and/or a surface active agent. Hereinafter, such another component may be occasionally referred to as secondary component. Examples of such another component include an aliphatic or alicyclic compound and/or an aliphatic or alicyclic compound containing two hydroxyl groups bonded to two different carbon atoms, polyvinyl alcohol, polyglycidyl ether, and polyethylene imine, of which the use of an aliphatic or alicyclic compound and/or an aliphatic or alicyclic compound containing two hydroxyl groups bonded to two different carbon atoms is particularly preferable.

Here, it is preferable that in addition to the polyethylene glycol and/or surface active agent, an aliphatic or alicyclic compound containing one hydroxyl group bonded to a carbon atom and/or an aliphatic or alicyclic compound containing two hydroxyl groups bonded to two different carbon atoms (alcohol, diol) be contained and account for 0.1 part by mass or more and 30 parts by mass or less relative to the total quantity, i.e. 100 parts by mass, of the sizing agent. The content is preferably 0.1 part by mass or more because lipophilic groups can be exposed out of the interface with air at the carbon fiber surface, which works to reduce friction, and the content is more preferably 20 parts by mass or more because the effect will be achieved more uniformly.

Specific examples of such an aliphatic or alicyclic compound containing one or two hydroxyl groups bonded to carbon atom(s) include aliphatic alcohols such as methyl alcohol, 2-propanol, n-butyl alcohol, isobutyl alcohol, n-decyl alcohol, myristyl alcohol, ethylene glycol, and propylene glycol; alicyclic alcohols such as cyclohexanol; aliphatic diols such as ethylene glycol, propylene glycol, 1,3-propanediol, 1,2-butanediol, 1,4-butanediol, 2-methyl-1,2-propanediol, 1,5-pentanediol, 1,6-hexanediol, 2,3-dimethyl-2,3-butanediol, 2-methyl-2-hydroxymethyl-1,3-propanediol, 2-ethyl-2-hydroxymethyl-1,3-propanediol, 2,4,7,9-tetramethyl-5-decyne-4,7-diols, and 2,4,7,9-tetramethyldecane-4,7-diols; and alicyclic diols such as hexanediol, cyclohexanediol, and 1,4-cyclohexanedimethanol.

For the sizing agent used for the present invention, the hydrophilic group ratio in the anion in the anionic surface active agent is preferably 17% or more.

If the hydrophilic group ratio in the anion is 17% or more, the solubility of the anionic ion portion in water will increase to allow the sizing agent to be dissolved easily in the rinsing step, leading to a decrease in the quantity of the sizing agent persisting on the carbon fiber bundle. It is preferably 20% or more and more preferably 30% or more.

The hydrophilic group ratio is calculated from the molecular weight of an anionic surface active agent. Specifically, it can be calculated from the molecular weight of the hydrophilic group portion in the anion of an anionic surface active agent and the molecular weight of the anionic surface active agent. Here, a hydrophilic group is a portion having a negative charge such as the sulfuric acid ester group ($SO_4^-$), sulfonic acid group ($SO_3^-$), carboxyl group ($COO^-$), phosphoric acid group ($HPO_3^-$), and hydroxyl group (OH-). Furthermore, in the case where the anionic portion in the surface active agent is partly left unreacted in the anion production step, the degree of reaction is calculated from the total quantity of the starting material and the substance obtained by the reaction (anion of anionic surface active agent) and the quantity of the substance obtained by the reaction, and the hydrophilic group ratio determined from the molecular weight of the anionic portion in the anionic surface active agent is multiplied by the degree of reaction. The product is defined as the degree of hydrophilicity of the anionic portion for the present invention.

For the sizing agent used for the present invention, it is preferable that the anionic surface active agent have a weight average molecular weight Mw of 150 or more and 600 or less. With an increasing Mw, the ratio of hydrophobic groups in the anionic surface active agent increases, and accordingly, the rate of its dissolution from the carbon fiber surface decreases. If the value of Mw is 600 or less, the hydrophilic group ratio, which is an indicator of the solubility of the anionic surface active agent, increases, leading to an increase in the solubility of the anionic surface active agent in water. The value of Mw is preferably 500 or more. From the viewpoint of processability, on the other hand, a larger value of Mw serves to form a sizing agent film with an increased strength, leading to decreased friction. In regard to the lower limit, the value of Mw is more preferably 250 or more. The weight average molecular weight Mw of the anionic surface active agent existing in the sizing agent-coated carbon fiber bundle can be determined based on results of GPC analysis of the sizing agent extracted with water from the sizing agent-coated carbon fiber bundle in combination with results of metal element identification performed by XPS or other elemental analysis methods.

Furthermore, if the amphoteric surface active agent accounts for 50 parts by mass or more relative to the total quantity of the surface active agent, the hydrophilic group portion in the amphoteric surface active agent is likely to interact easily with water to develop high solubility, and this can allow the sizing agent to be dissolved easily in the rinsing step, leading to a decrease in the quantity of the sizing agent persisting on the carbon fiber bundle.

For the sizing agent used for the present invention, it is preferable that the alkyl group in the amphoteric surface active agent contains 17 or less carbon atoms on average.

If the alkyl group contains 17 or less carbon atoms on average, the amphoteric surface active agent will be high in solubility in water to allow the sizing agent to be dissolved easily in the rinsing step, leading to a decrease in the quantity of the sizing agent persisting on the carbon fiber bundle. The average number of carbon atoms contained in the alkyl group is more preferably 16.5 or less and still more preferably 16 or less. On the other hand, it is preferably 8 or more. If the average number of carbon atoms is less than 8, the sizing agent will have a larger surface free energy, and the dry F-F friction coefficient will increase.

The average number of carbon atoms contained in the alkyl group existing in a amphoteric surface active agent can be determined by examining the sizing agent extracted with water from the sizing agent-coated carbon fiber bundle. In an available method, the sizing agent extracted with water is freeze-dried to prepare a specimen, which is then examined on the basis of a combination of structural analysis using IR spectra observed by infrared spectroscopy, proton NMR and carbon NMR analysis of the freeze-dried specimen, and mass spectrum analysis.

<Measuring method for absorbance of extract from carbon fiber>

It is preferable that an extract with water from the sizing agent-coated carbon fiber bundle according to the present invention have an absorbance of 0.06 or more. If it is 0.06 or more, it will be easier to remove contaminants such as oxides attached on the surface of the carbon fibers, leading to a higher adhesiveness. The value of absorbance is more preferably 0.08 or more and still more preferably 0.10 or more.

Here, the absorbance of a water extract from the sizing agent-coated carbon fiber bundle to be used for the present invention can be determined by the procedure described below. A 1.0 g test piece cut out of a carbon fiber bundle is put in a glass container with a lid having a capacity of 20 $cm^3$, and 10.0 g of distilled water at 25°C is poured. A shaking apparatus was set to an amplitude of 30 mm and a shaking speed of 120 rpm, and the glass container was mounted on the shaking apparatus, followed by shaking for 1 minute. After the end of shaking, the carbon fiber bundle was taken out immediately from the solution. The solution extracted from the carbon fiber was put in a quartz cell with a light path length of 1.0 cm, and absorbance measurement was performed over the range of 200 to 900 nm by ultraviolet visible spectrophotometry using distilled water as contrast solution. The absorbance at 600 nm was recorded. The shaking apparatus used was Shaking Bath SB-13, manufactured by AS ONE Corporation. The ultraviolet visible spectrophotometer used was V-550, manufactured by JASCO Corporation.

For the sizing agent used for the present invention, it is preferable that the amphoteric surface active agent have a weight average molecular weight Mw of 150 or more and 600 or less. With an increasing Mw, the viscosity of the amphoteric surface active agent increases, and accordingly, the rate of its dissolution from the carbon fiber surface decreases. If the value of Mw is 600 or less, the viscosity, which is an indicator of the solubility of an anionic surface active agent, decrease, leading to an increase in the solubility of the amphoteric surface active agent in water. The value of Mw is more preferably 250 or less. From the viewpoint of coating, on the other hand, a larger value of Mw serves to depress the evaporation of the sizing agent in the coating step. In regard to the lower limit, the value of Mw is preferably 150 or more. The weight average molecular weight Mw of the amphoteric surface active agent existing in a sizing agent-coated carbon fiber bundle can be determined based on results of GPC analysis of the sizing agent extracted with water from the sizing agent-coated carbon fiber bundle in combination with results of metal element identification performed by XPS or other elemental analysis methods.

For the sizing agent used for the present invention, it is preferable that when the polyethylene glycol and/or surface active agent to be applied is heated in air at a rate of 10°C/min, the residue mass fraction measured at the time when 300°C is reached be 35% or less. If the residue mass fraction is 35% or less, components with low heat resistance in the sizing agent will decompose before the matrix resin melts, and it leads to a decrease in the quantity of the sizing agent that is taken into the matrix resin, thereby reducing the influence on the mechanical properties of the resulting composite material and ensuring stable physical properties. It is more preferably 20% or less and still more preferably 5% or less.

For the sizing agent used for the present invention, it is preferable that when the polyethylene glycol and/or surface active agent to be applied is heated in air at a rate of 10°C/min, the residue mass fraction measured at the time when 350°C is reached be 35% or less. If the residue mass fraction is 30% or less, components with low heat resistance in the sizing agent will decompose before the matrix resin, which is highly heat resistant, starts to melt, and it leads to a decrease in the portion of the sizing agent that is taken into the matrix resin, thereby reducing the influence on the mechanical properties of the resulting composite material and ensuring stable physical properties. It is more preferably 25% or less and still more preferably 5% or less.

In the next place, the components of the sizing agent-coated carbon fiber bundle used for the present invention will be described.

There are no particular limitations on the carbon fiber bundle to use for the present invention, but polyacrylonitrile based carbon fibers are preferred from the viewpoint of mechanical properties. A polyacrylonitrile based carbon fiber bundle can be produced by treating fibers of a polyacrylonitrile based polymer that serves as precursor for carbon fibers to make them flame resistant in an oxidizing atmosphere at a maximum temperature of 200°C to 300°C, subjecting it to preliminary carbonization treatment in an inert atmosphere at a maximum temperature of 500°C to 1,200°C, and then subjecting it to carbonization treatment in an inert atmosphere at a maximum temperature of 1,200°C to 2,000°C.

The carbon fiber bundle according to the present invention preferably has a strand strength of 4.0 GPa or more, more preferably 4.9 GPa or more. If the carbon fiber bundle has a strand strength of 4.0 GPa or more, the carbon fiber bundle will maintain a sufficiently high strand strength after the rinsing of the sizing agent, making it easy to produce a composite material having improved mechanical properties.

For the present invention, it is preferable to subject the carbon fiber bundle to oxidization treatment so that oxygen-containing functional groups are introduced into the surface in order to improve the adhesiveness between the carbon fiber bundle and the matrix resin. Useful oxidization treatment methods include gas phase oxidization, liquid phase oxidization, and liquid phase electrolytic oxidization, of which liquid phase electrolytic oxidization has been preferred from the viewpoint of high productivity and uniform treatment.

For the present invention, an acidic electrolyte or an alkaline electrolyte may be used as electrolyte for the liquid phase electrolytic oxidization process. Examples of the acidic electrolyte include, for example, inorganic acids such as sulfuric acid, nitric acid, hydrochloric acid, phosphoric acid, boric acid, and carbonic acid; organic acids such as acetic acid, butyric acid, oxalic acid, acrylic acid, and maleic acid; and salts such as ammonium sulfate and ammonium hydrogen sulfate. Among others, sulfuric acid and nitric acid, which are strong acids, are preferred. Specific examples of the alkaline electrolyte include aqueous solutions of hydroxides such as sodium hydroxide, calcium hydroxide, and barium hydroxide; aqueous solutions of carbonates such as sodium carbonate, calcium carbonate, barium carbonate, and ammonium carbonate; aqueous solutions of hydrogen carbonates such as sodium hydrogen carbonate, calcium hydrogen carbonate, barium hydrogen carbonate, and ammonium hydrogen carbonate; and others such as aqueous solutions of ammonia, tetraalkylammonium hydroxide, and hydrazine.

For the carbon fiber bundle according to the present invention, the surface oxygen concentration measured by X-ray photoelectron spectroscopy is preferably 0.08 or more and 0.25 or less.

Because of having a functional group on the surface of the carbon fiber, it develops affinity with the matrix resin and can exhibit a high adhesive strength. If the surface oxygen concentration (O/C) is less than 0.08, the affinity between the carbon fiber surface and the matrix resin will decrease, leading to a decline in the adhesive strength. The surface oxygen concentration is preferably 0.15 or more. A value of 0.15 or more is preferable because it works to increase the affinity between the carbon fiber surface and the matrix resin. Furthermore, the O/C ratio is more preferably 0.25 or less. If the O/C ratio is more than 0.25, the number of functional groups will increase, but the surface layer of the carbon fiber will come off more easily, leading to a decrease in adhesive strength.

In the next place, the production method for a sizing agent-coated carbon fiber bundle according to the present invention will be described.

First, the means of applying (imparting) a sizing agent adopted for the present invention to a carbon fiber bundle will be described.

For the present invention, it is preferable that the sizing agent be diluted with a solvent and used in the form of a uniform solution. Examples of the solvent include water, methanol, ethanol, 2-propanol, acetone, methyl ethyl ketone, dimethyl formamide, and dimethyl acetamide, of which water is preferred from the viewpoint of easy handling and safety advantages.

Examples of the application means include a method in which a carbon fiber bundle is guided by rollers and immersed in a sizing agent solution, a method in which a carbon fiber bundle is brought into contact with rollers carrying a sizing agent solution applied thereon, and a method in which a sizing agent solution is sprayed to a carbon fiber bundle, of which the method in which a carbon fiber bundle is guided by rollers and immersed in a sizing agent solution is preferred as a means of producing a sizing agent-coated carbon fiber bundle to use for the present invention. Either a batch-wise or continuous procedure may be adopted for the application of a sizing agent, but the use of a continuous type procedure is preferred from the viewpoint of high productivity and easy reduction in unevenness. It is also preferable to vibrate the carbon fiber bundle during the sizing agent application step using an ultrasonic device.

For the present invention, it is preferable that the application of a sizing agent solution be followed by carrying out a contact type drying step, such as bringing the carbon fiber bundle into contact with a heated roller, to produce a sizing agent-coated carbon fiber bundle. After being introduced onto a heated roller, the carbon fiber bundle is pressed against the heated roller by a tension and dried rapidly, and accordingly, the carbon fiber bundle is spread by the heated roller into a flattened shape and easily fixed by the sizing agent. In the flattened-shaped carbon fiber bundle, the contact area between single fibers is so small that, when immersed in water, the contact area with water will be large, probably leading to an increased solubility. Heating by a contact type drying method is preferably performed at a temperature of 120°C or more. If the temperature is 120°C or more, it serves for easy fixation of the carbon fiber bundle in a flattened shape. It is more preferably 130°C or more. The process used for the present invention may include a preliminary drying step in which the bundle travels to pass on a heated roller and a subsequent second drying step for additional heat treatment. It is preferable that the heat treatment in the second drying step be performed by a noncontact type drying method, which generally serves to perform heat treatment easily at a high temperature. Such heat treatment works for further removal of the diluent solvent remaining in the sizing agent so that the viscosity of the sizing agent is stabilized to allow the solubility to be increased stably.

In addition, the implementation of the heat treatment step serves to control the surface free energy of the polyethylene glycol and/or surface active agent existing on the carbon fiber to decrease the friction coefficient, and accordingly, the handleability of the sizing agent-coated carbon fiber bundle will be improved. The temperature of the heat treatment is preferably in the temperature range of 120°C to 260°C. If it is 120°C or more, the removal of the diluted solution serves to control the ionization of the anionic surface active agent or amphoteric surface active agent to decrease the electric interaction, thereby enhancing the handleability. In addition, the viscosity decreases as a result of the interaction between the polyethylene glycol and/or nonionic surface active agent and water, thereby allowing the handleability to be improved easily. The temperature is more preferably 150°C or more and still more preferably 180°C or more. On the other hand, if the heat treatment is performed at a temperature not higher than the upper limit of 260°C, heat degradation of the polyethylene glycol and/or surface active agent components can be suppressed easily to allow a favorable solubility to be maintained. The temperature is preferably 240°C or less and more preferably 220°C or less.

Furthermore, the aforementioned heat treatment may be carried out by exposure to microwave and/or exposure to infrared light.

EXAMPLES

The present invention will now be illustrated in more detail with reference to examples, though the invention should not be construed as being limited to these examples.

<Measuring method for quantity of applied sizing agent>

A 2.0 $\pm$ 0.5 g sample of a sizing agent-coated carbon fiber bundle was weighed ($W_1$) (to the fourth decimal place) and left to stand for 15 minutes in an electric furnace (capacity 120 cm$^3$) placed in a nitrogen flow of 50 milliliters/min at a temperature of 450°C to ensure complete thermal decomposition of the sizing agent. The carbon fiber bundle was transferred to a container placed in a dry nitrogen flow of 20 liters/min and cooled for 15 minutes and then the weight ($W_2$) of the carbon fiber bundle was measured (to the fourth decimal place), followed by calculating the loss on heating as $W_1 - W_2$. This loss on heating was converted into a value in parts by mass relative to 100 parts by mass of the sizing agent-coated carbon fiber bundle (round off to the second decimal place) to give the quantity of the applied sizing agent (in parts by mass). Two measurements were taken and their average was adopted as the quantity of the applied sizing agent.

<Measuring method for residue mass fraction of polyethylene glycol and/or surface active agent>

The residue mass fraction of a sizing agent such as polyethylene glycol and/or a surface active agent was measured using thermogravimetry-differential thermal analysis (TG-DTA) equipment. A 10 $\pm$ 0.5 mg sample of a surface active agent was weighed ($W_3$) (to the fourth decimal place) on an aluminum pan and placed in a heating apparatus. Then, it was heated from 25°C to 450°C at a rate of 10°C/min in an air flow of 100 milliliters/min to ensure complete heat decomposition of the surface active agent. Its mass ($W_4$) was weighed (to the fourth decimal place) when the temperature reached 300°C and its mass ($W_5$) was weighed (to the fourth decimal place) when the temperature reached 350°C. The residue mass fraction (%) at the temperature of 300°C and the residue mass fraction (%) at the temperature of 350°C were calculated as $W_4/W_3 \times 100$ (%) and $W_5/W_3 \times 100$ (%), respectively.

For the present invention, the measuring equipment used was TG-DTA2000SA, manufactured by Bruker.

<Measuring method for quantity of functional groups existing on surface of carbon fiber bundle>

For the examples given herein, the surface oxygen concentration of a carbon fiber bundle was measured by X-ray photoelectron spectroscopy according to the procedure described below. First, the carbon fiber bundle was cut to prepare 20 mm specimens, and they were spread and laid on a copper specimen support. Then, they were examined by X-ray photoelectron spectroscopy using $AlK\alpha_{1,2}$ as X-ray source with the specimen chamber's inner pressure main-

tained at $1\times10^{-8}$ Torr and the photoelectron take-off angle set to 45°. Here, for peak correction for electrification that occurs during measurement, the value of bond energy at the $C_{1S}$ primary peak was adjusted to 285 eV. The $C_{1S}$ peak area was determined based on a straight baseline drawn in the range of 275 to 290 eV as bond energy. The $O_{1S}$ peak area was determined based on a straight baseline drawn in the range of 525 to 540 eV as bond energy. The X-ray photoelectron spectroscopy equipment used was ESCA-1600, manufactured by ULVAC-PHI, Inc.

<Measuring method for CF scratched fuzz>

Two metal bars (material: SUS304 stainless steel) with a diameter of 50 mm and a surface roughness Rmax of 0.3 $\mu$m were fixed at different vertical heights with a space of 150 mm in between in such a manner that a carbon fiber bundle can travel while in contact with the metal bars at a total angle of $0.785\pi$ (rad). Then, a carbon fiber bundle was hung over the metal bars and the unwinding tension from the package was set to 800 g. A driving roller was provided to pull the carbon fiber bundle at a speed of 6 m/min so that it travels over the metal bars, and a laser beam was applied at right angles to the side of the fiber threads having passed the second metal bar. A fuzz detection device was provided to count the number of pieces of fuzz for every 5-minute period and record the numbers.

For the present invention, specimens were rated according to the three stage criterion for handleability. Specimens rated as S or A were acceptable while those rated as B were unacceptable.

S: Less than 15 pieces of fuzz per meter
A: 15 or more and less than 25 pieces of fuzz per meter
B. 25 or more pieces of fuzz per meter

<Measuring method for dry F-F friction coefficient>

A sizing agent-coated carbon fiber bundle was wound around an irrotationally fixed bobbin to a uniform thickness of 5 to 10 mm with a winding density in the range of 0.9 to 1.4 g/cm$^3$ and then another carbon fiber bundle, which was the same as the above wound one, was wound thereon with a contact angle of $3\pi$ (rad) in such a manner that it did not overlap itself, typically at intervals of 3 to 5 mm in the width direction. A weight (T1 = 0.25 g/tex) was attached to one end of the wound carbon fiber bundle and the other end was pulled via a spring balance at a speed of 1 m/ min, followed by measuring the tension T2 at the time when the wound carbon fiber bundle started to move. The, the dry F-F friction coefficient was calculated by the equation given below. Two measurements were taken and their average was adopted to represent the dry F-F friction coefficient. Here, the bobbin used for the measurement was left to stand for 2 hours or more before the start of measurement under the same temperature and humidity conditions as in the measuring atmosphere (measuring conditions: 23$\pm$3°C, 60$\pm$5%).

Dry F-F friction coefficient = ln(T2/T1)/$\theta$
T2: tension measured when the carbon fiber bundle starts to move (= reading on spring balance)
T1: weight (= 0.25 g/tex)
$\theta$: total contact angle (= $3\pi$ rad) of roll and wound thread

<Measuring method for wet F-M friction coefficient>

A 50 mm SUS304 stainless steel bar was fixed irrotationally parallel to the ground. A sizing agent-coated carbon fiber bundle was cut out of a bobbin and immersed in pure water for 1 second. Then, it was wound around a fixed bobbin to a uniform thickness and with a width of 1 to 3 mm and a contact angle of $3\pi$ (rad) in such a manner that it did not overlap itself, typically at intervals of 3 to 5 mm in the width direction. A weight (T3 = 0.25 g/tex) was attached to one end of the wound carbon fiber bundle and the other end was pulled via a spring balance at a speed of 1 m/ min, followed by measuring the tension T4 at the time when the wound carbon fiber bundle started to move. Then, the friction coefficient between the fiber and SUS304 stainless steel in the wet test was calculated by the equation given below. Two measurements were taken and their average was adopted to represent the wet F-M friction coefficient.

Wet F-M friction coefficient = ln(T4/T3)/$\theta$
T4: tension measured when the carbon fiber bundle starts to move (= reading on spring balance)
T3: weight (= 0.25 g/tex)
$\theta$: total contact angle (= $3\pi$ rad) of roll and wound thread

<Strand strength and strand elastic modulus of carbon fiber bundle>

The strand strength and strand elastic modulus of a carbon fiber bundle are determined by the procedure described below according to the resin impregnated strand test method specified in JIS R7608 (2004). It is noted that in the case of a twisted carbon fiber bundle, its evaluation is performed after unraveling the twist by twisting it in the reverse rotation direction by the same number of turns as its original twist count. The resin mixture to be used should consist of Celloxide (registered trademark) 2021P (manufactured by Daicel Chemical Industries, Ltd.), boron trifluoride monoethylamine (manufactured by Tokyo Chemical Industry Co. Ltd.), and acetone mixed at a ratio of 100/3/4 (parts by mass), and it is cured under the conditions of atmospheric pressure, a temperature of 125°C, and a curing time of 30 minutes. Ten strands formed of carbon fiber bundles are examined and the measurements taken are averaged to represent the strand strength and strand elastic modulus. Here, the calculation of strand elastic modulus covers the strain range of 0.1% to 0.6%.

<Measuring method for interfacial shear strength>

Single threads were pulled out from a carbon fiber bundle, sandwiched between two (upper and lower) resin films each laminated to a thickness of 0.4 mm or more, heat-pressed in a hot pressing machine, and cooled to room temperature while maintaining the pressure to prepare a molded plate containing embedded carbon fiber single threads. A dumbbell shaped test piece for IFSS measurement was punched out from this molded plate using an SD lever type sample cutting machine.

Both ends of the dumbbell shaped test piece were held and a tensile force was applied in the fiber axis direction (length direction) to pull it at a rate of 2.0 mm/min until the strain reached 12%. Subsequently, a 20 mm central portion was cut out from the test piece, sandwiched between two glass plates, and heated on a hot plate to a temperature not lower than the melting point of the thermoplastic resin. The interior of the test piece, which was made transparent by heating, was observed under a microscope to determine the lengths of the fragmented fibers. Furthermore, the critical fiber length lc was calculated from the average fractured fiber length la by the following equation: $lc$ ($\mu$m) = (4/3) $\times$ la ($\mu$m). The strand tensile strength $\sigma$ and the carbon fiber filament diameter d were measured, and the interfacial shear strength (IFSS), which represents the adhesive strength at the interface between carbon fiber and resin, was calculated by the following equation. In Examples, five measures were taken (n = 5) and their average was adopted to represent the test results.

$$IFSS\ (Mpa) = \sigma\ (MPa) \times d\ (\mu m) / (2 \times lc)\ (\mu m)$$

For the present invention, test pieces of different resins were rated according to the three stage criterion for IFSS given below. Test pieces rated as A were acceptable.

• Resin: polyether ether ketone

  A: IFSS is 38 or more.
  B: IFSS is 35 or more and less than 38.
  C: IFSS is less than 35.

The materials and components used in each Example and Comparative example were as described below.

Component (A): polyethylene glycol and/or nonionic surface active agent

  A-1: PEG distearic acid ester
  (IONET (registered trademark) DS4000, manufactured by Sanyo Chemical Industries Ltd., HLB: 16.6)
  A-2: PEG monostearic acid ester
  (IONET (registered trademark) MS1000, manufactured by Sanyo Chemical Industries Ltd., HLB: 15.7)
  A-3: PEG monooleic acid ester
  (IONET (registered trademark) MO600, manufactured by Sanyo Chemical Industries Ltd., HLB: 13.8)
  A-4: PEG monooleic acid ester
  (IONET (registered trademark) MO400, manufactured by Sanyo Chemical Industries Ltd., HLB: 11.7)

A-5: PEG dioleic acid ester

(IONET (registered trademark) DO1000, manufactured by Sanyo Chemical Industries Ltd., HLB: 12.9)

A-6: PEG dioleic acid ester

(IONET (registered trademark) DO600, manufactured by Sanyo Chemical Industries Ltd., HLB: 10.5)

A-7: polyethylene glycol

(PEG600, manufactured by Sanyo Chemical Industries Ltd., HLB: 20, molecular weight: 600)

A-8: polyethylene glycol

(PEG4000, manufactured by Sanyo Chemical Industries Ltd., HLB: 20, molecular weight: 4,000)

A-9: polyethylene glycol

(PEG20000, manufactured by Sanyo Chemical Industries Ltd., HLB: 20, molecular weight: 20,000)

Component (B): anionic surface active agent

B-1: sodium bis(2-ethylhexyl)sulfosuccinate

(manufactured by Tokyo Chemical Industry Co., Ltd.)

B-2: sulfated butyl oleate oil

(LOTAT (registered trademark) OH-104K, manufactured by Lion Corporation, degree of reaction: 79%)

B-3: sodium alkylnaphthalenesulphonate

(manufactured by Tokyo Chemical Industry Co., Ltd.)

B-4: sodium dodecylbenzenesulphonate

(NEOPELEX (registered trademark) G-15, manufactured by Kao Corporation)

B-5: sodium laurylsulfate

(EMAL (registered trademark) 10G, manufactured by Kao Corporation)

B-6: disodium lauryl sulfosuccinate

(BEAULIGHT (registered trademark) SSS, manufactured by Sanyo Chemical Industries Ltd.)

B-6: sodium ethylhexyl sulfate

(SANDET (registered trademark) ONA, manufactured by Sanyo Chemical Industries Ltd.)

Component (C): amphoteric surface active agent

C-1: betaine lauryldimethylaminoacetate

(AMPHITOL (registered trademark) 24B, manufactured by Kao Corporation)

C-2: 2-alkyl-N-carboxymethyl-N-hydroxyethyl imidazolinium betaine

(AMPHITOL (registered trademark) 20Y-B, manufactured by Kao Corporation)

C-3: N,N-dimethyldecylamine oxide

(CADENAX (registered trademark) DM10D-W, manufactured by Lion Specialty Chemicals Co., Ltd.)

C-4: lauryldimethylamine oxide

(CADENAX (registered trademark) DM12D-W(C), manufactured by Lion Specialty Chemicals Co., Ltd.)

C-5: N,N-dimethylmyristylamine oxide

(CADENAX (registered trademark) DM14D-N, manufactured by Lion Specialty Chemicals Co., Ltd.)

C-6: betaine stearyldimethylaminoacetate

(AMPHITOL (registered trademark) 86B, manufactured by Kao Corporation)

Component (D): alcohol, diol component

D-1: propylene glycol (manufactured by FUJIFILM Wako Pure Chemical Corporation)

D-2: 2-propanol (manufactured by FUJIFILM Wako Pure Chemical Corporation)

Component (E): other components

E-1: polyvinyl alcohol
(PVA, manufactured by FUJIFILM Wako Pure Chemical Corporation (polymerization degree: about 500))
E-2: diglycerol polyglycidyl ether
(Denacol (registered trademark) Ex-421, manufactured by Nagase ChemteX Corporation)
E-3: polyethylenimine
(Lupasol (registered trademark) G20 Waterfree, manufactured by BASF Japan)

Component (F): thermoplastic resin

F-1: polyether ether ketone
(Victrex (registered trademark) 450G, manufactured by Victrex)
The procedure used in this Example includes the first to fourth steps described below.
• First step: A carbon fiber bundle to be used as base material is prepared in this step.

An acrylonitrile copolymer was spun and calcined to prepare a carbon fiber bundle containing a total of 12,000 filaments and having a total fineness of 800 tex. The strand strength and strand elastic modulus of this carbon fiber bundle were examined and they were found to be 5.1 GPa and 240 GPa, respectively. Then, the carbon fiber bundle was subjected to electrolytic surface treatment with an electric charge of 80 coulombs per gram of the carbon fiber bundle using an aqueous solution of ammonium hydrogen carbonate as electrolyte. After the electrolytic surface treatment, the carbon fiber bundle was rinsed and dried in heated air to provide a carbon fiber bundle to use as base material. The surface oxygen concentration of the carbon fiber bundle obtained in this first step was measured.
• Second step: A sizing agent is applied to the carbon fiber bundle in this step.

(A-1) was used as the compound (A) in a quantity as shown in Table 1, followed by adding water to prepare an approximately 0.8 mass% aqueous solution in a uniformly dissolved state. This aqueous solution was used as an aqueous sizing agent solution. A surface-treated carbon fiber bundle was coated with the sizing agent by the immersion coating method and heat-treated on a hot roller at a temperature of 120°C for 15 seconds as a preliminary drying step, followed by heat treatment in heated air at a temperature of 210°C for 60 seconds as a second drying step to provide a sizing agent-coated carbon fiber bundle. The quantity of the sizing agent to be applied was adjusted so that it would account for 0.25 part by mass relative to the total quantity, i.e. 100 parts by mass, of the surface-treated sizing agent-coated carbon fiber bundle. Then, the residue mass fraction of the sizing agent applied in this second step was measured. The residue mass fraction (%) at the time when the temperature reached 300°C was 3% and the residue mass fraction (%) at the time when the temperature reached 350°C was 1%, showing that a sufficient level of heat decomposition was achieved.
• Third step: An evaluation of the handleability of the sizing agent-coated carbon fiber bundle is made.

The handleability of the sizing agent-coated carbon fiber bundle obtained in the second step was evaluated on the basis of the evaluation method for friction coefficient and the measuring method for OF scratched fuzz. Results showed that the dry F-F friction coefficient was 0.22 and the wet F-M friction coefficient was also 0.22, suggesting that fuzz generation does not occur easily and a sufficiently high handleability can be achieved in a processing step in which the bars are located in air and water.
• Fourth step: The quantity of the sizing agent persisting after rinsing is evaluated.

This step was carried out for the sizing agent-coated carbon fiber bundle resulting from the previous step. As described in the sections <Method for calculation of quantity of sizing agent persisting after rinsing for 50 seconds> and <Method for calculation of quantity of sizing agent persisting after rinsing for 25 seconds>, the sizing agent-coated carbon fiber bundle was rinsed to provide samples of the sizing agent-coated carbon fiber bundle rinsed for 50 seconds or 25 seconds, and the quantities of the sizing agent persisting after 50-second rinsing or 25-second rinsing were calculated. Results showed that the quantity of the sizing agent persisting after 50-second rinsing accounted for 0.10 part by mass relative to 100 parts by mass of the sizing agent-coated carbon fiber bundle and that the quantity of the sizing agent persisting after 25-second rinsing accounted for 0.11 part by mass relative to 100 parts by mass of the sizing agent-coated carbon fiber bundle. In both cases, the persisting quantity was small, showing that the solubility was sufficiently high.

- Fifth step: A test piece for IFSS measurement is prepared and evaluated.

From the rinsed sizing agent-coated carbon fiber bundle samples resulting from the above step and (F-1) adopted as the thermoplastic resin (F), test pieces for IFSS measurement were prepared according to the interfacial shear strength measurement method.

Subsequently, the resulting test pieces for IFSS measurement were examined to measure their IFSS. Results showed that the IFSS of the test piece containing the sizing agent-coated carbon fiber bundle sample rinsed for 50 seconds was 38 MPa and that the IFSS of the test piece containing the sizing agent-coated carbon fiber bundle sample rinsed for 25 seconds was 38 MPa. In both cases, it was found that a sufficiently high adhesiveness was achieved. Results obtained above are summarized in Table 1.

[Table 1]

Table 1

| | unit | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|---|
| strand strength | GPa | 5.1 | 5.1 | 5.1 | 5.1 | 5.1 | 5.1 | 5.1 | 5.1 | 5.1 | 5.1 |
| strand elastic modulus | GPa | 240 | 240 | 240 | 240 | 240 | 240 | 240 | 240 | 240 | 240 |
| quantity of surface functional group | - | 0.21 | 0.21 | 0.21 | 0.21 | 0.21 | 0.21 | 0.21 | 0.21 | 0.21 | 0.21 |
| compound | - | A-1 | A-2 | A-3 | A-3 | A-3 | A-3 | A-3 | A-4 | A-5 | A-6 |
| type of sizing agent | - | surface active agent | surface active agent | surface active agent | surface active agent | surface active agent | surface active agent | surface active agent | surface active agent | surface active agent | surface active agent |
| type of surface active agent | - | nonionic | nonionic | nonionic | nonionic | nonionic | nonionic | nonionic | nonionic | nonionic | nonionic |
| total quantity of PEG or surface active agent | parts by mass | 100 | 100 | 100 | 100 | 100 | 100 | 100 | 100 | 100 | 100 |
| PEG or nonionic surface active agent relative to total quantity of PEG or surface active agent | parts by mass | 100 | 100 | 100 | 100 | 100 | 100 | 100 | 100 | 100 | 100 |
| HLB (Griffin) | - | 16.6 | 15.7 | 13.8 | 13.8 | 13.8 | 13.8 | 13.8 | 11.7 | 12.9 | 10.5 |
| chain-end hydroxyl group | % | 0 | 50 | 50 | 50 | 50 | 50 | 50 | 50 | 0 | 0 |

EP 4 047 126 B1

17

| | unit | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|---|
| weight average molecular weight Mw of PEG or nonionic surface active agent | - | 4,560 | 1,280 | 880 | 880 | 880 | 880 | 880 | 680 | 1,560 | 1,160 |
| quantity of sizing agent | parts by mass | 0.25 | 0.25 | 0.25 | 0.45 | 0.60 | 0.90 | 0.09 | 0.25 | 0.25 | 0.25 |
| quantity of sizing agent after 50-second rinsing | parts by mass | 0.10 | 0.12 | 0.10 | 0.11 | 0.12 | 0.15 | 0.05 | 0.13 | 0.16 | 0.16 |
| quantity of sizing agent after 25-second rinsing | parts by mass | 0.11 | 0.13 | 0.10 | 0.12 | 0.14 | 0.19 | 0.05 | 0.16 | 0.20 | 0.20 |
| drv F-F friction coefficient | - | 0.22 | 0.24 | 0.27 | 0.27 | 0.24 | 0.24 | 0.42 | 0.25 | 0.23 | 0.25 |
| wet F-M friction coefficient | - | 0.22 | 0.23 | 0.24 | 0.24 | 0.23 | 0.23 | 0.24 | 0.21 | 0.26 | 0.23 |
| residue mass fraction at 300°C | % | 3 | 39 | 80 | 80 | 80 | 80 | 80 | 80 | 70 | 73 |
| residue mass fraction at 350°C | % | 1 | 10 | 46 | 46 | 46 | 46 | 46 | 40 | 17 | 27 |

| | unit | Example 1 | Example 2 | Example 3 | Example 4 | Example 5 | Comparative example 1 | Comparative example 2 | Comparative example 3 | Comparative example 4 | Comparative example 5 |
|---|---|---|---|---|---|---|---|---|---|---|---|
| drying temperature in second drying step | °C | 210 | 210 | 210 | 210 | 210 | 210 | 210 | 210 | 210 | 210 |
| fuzz | pieces/ m | S(10) | S(10) | S(10) | S(10) | S(10) | S(10) | B(35) | S(10) | S(10) | S(10) |
| IFSS (sizing agent-coated carbon fiber bundle after 50-second rinsing) | MPa | A(38) | A(38) | A(38) | A(38) | A(38) | B(37) | A(39) | B(37) | B(37) | B(37) |
| IFSS (sizing agent-coated carbon fiber bundle after 25-second rinsing) | MPa | A(38) | B(37) | A(38) | A(38) | B(37) | B(37) | A(39) | B(37) | B(36) | B(36) |

EP 4 047 126 B1

(Example 2)

Except that in the second step, the sizing agent used contained the components shown in Table 1, the same procedure as in Example 1 was carried out to produce a sizing agent-coated carbon fiber bundle, which was then subjected to various evaluations. Results are summarized in Table 1 and they show that the carbon fiber bundle had a high handleability and also had a sufficiently high solubility.

(Examples 3 to 5)

Except that in the second step, the sizing agent used contained the components shown in Table 1 and that the sizing agent was applied in the quantity shown there, the same procedure as in Example 1 was carried out to produce a sizing agent-coated carbon fiber bundle, which was then subjected to various evaluations. Results are summarized in Table 1 and they show that the carbon fiber bundle had a high handleability and also had a sufficiently high solubility.

(Comparative example 1)

Except that in the second step, the sizing agent used contained the components shown in Table 1 and that the sizing agent was applied in the quantity shown there, the same procedure as in Example 1 was carried out to produce a sizing agent-coated carbon fiber bundle, which was then subjected to various evaluations. Results are summarized in Table 1 and they show that the carbon fiber bundle had a high handleability, but the quantity of the persisting sizing agent was large, leading to an insufficient solubility.

(Comparative example 2)

Except that in the second step, the sizing agent used contained the components shown in Table 1 and that the sizing agent was applied in the amount shown there, the same procedure as in Example 1 was carried out to produce a sizing agent-coated carbon fiber bundle, which was then subjected to various evaluations. Results are summarized in Table 1 and they show that the carbon fiber bundle had a high dry F-F friction coefficient and failed to have a sufficiently high handleability.

(Comparative examples 3 to 5)

Except that in the second step, the sizing agent used contained the components shown in Table 1, the same procedure as in Example 1 was carried out to produce a sizing agent-coated carbon fiber bundle, which was then subjected to various evaluations. Results are summarized in Table 1 and they show that the carbon fiber bundle had a high handleability, but was low in HLB and low in chain-end hydroxyl group ratio and failed to have a sufficiently high solubility.

(Example 6)

Except that in the second step, the sizing agent used contained the components shown in Table 2, the same procedure as in Example 1 was carried out to produce a sizing agent-coated carbon fiber bundle, which was then subjected to various evaluations. Results are summarized in Table 2 and they show that the carbon fiber bundle had a high handleability and also had a sufficiently high solubility.

[Table 2]

[Table 2]

| | unit | Example 6 | Example 7 | Example 8 | Example 9 | Comparative example 6 | Example 10 | Example 11 | Comparative example 7 |
|---|---|---|---|---|---|---|---|---|---|
| strand strength | GPa | 5.1 | 5.1 | 5.1 | 5.1 | 5.1 | 5.1 | 5.1 | 5.1 |
| strand elastic modulus | GPa | 240 | 240 | 240 | 240 | 240 | 240 | 240 | 240 |
| quantity of surface functional group | - | 0.21 | 0.14 | 0.21 | 0.21 | 0.21 | 0.21 | 0.21 | 0.21 |
| compound | - | A-7 | A-7 | A-7 | A-7 | A-7 | A-8 | A-9 | E-1 |
| type of sizing agent | - | PEG | PEG | PEG | PEG | PEG | PEG | PEG | PVA |
| type of surface active agent | - | - | - | - | - | - | - | - | - |
| total quantity of PEG or surface active agent | parts by mass | 100 | 100 | 100 | 100 | 100 | 100 | 100 | 0 |
| PEG or nonionic surface active agent relative to total quantity of PEG or surface active agent | parts by mass | 100 | 100 | 100 | 100 | 100 | 100 | 100 | 0 |
| HLB (Griffin) | - | 20 | 20 | 20 | 20 | 20 | 20 | 20 | - |
| chain-end hydroxyl group | % | 100 | 100 | 100 | 100 | 100 | 100 | 100 | - |
| weight average molecular weight Mw of PEG or nonionic surface active agent | - | 600 | 600 | 600 | 600 | 600 | 4,000 | 20,000 | 24,000 |
| quantity of sizing agent | parts by mass | 0.25 | 0.25 | 0.45 | 0.60 | 0.11 | 0.25 | 0.25 | 0.35 |
| quantity of sizing agent after 50-second rinsing | parts by mass | 0.05 | 0.04 | 0.07 | 0.09 | 0.04 | 0.07 | 0.12 | 0.13 |
| quantity of sizing agent after 25-second rinsing | parts by mass | 0.07 | 0.06 | 0.11 | 0.13 | 0.05 | 0.09 | 0.15 | 0.18 |
| drv F-F friction coefficient | - | 0.32 | 0.30 | 0.32 | 0.32 | 0.40 | 0.26 | 0.26 | 0.30 |
| wet F-M friction coefficient | - | 0.24 | 0.22 | 0.24 | 0.24 | 0.24 | 0.24 | 0.24 | 0.28 |
| residue mass fraction at 300°C | % | 3 | 3 | 3 | 3 | 3 | 3 | 3 | 90 |
| residue mass fraction at 350°C | % | 1 | 1 | 1 | 1 | 1 | 1 | 1 | 52 |
| drying temperature in second drying step | °C | 210 | 210 | 210 | 210 | 210 | 210 | 210 | 210 |

(continued)

| | unit | Example 6 | Example 7 | Example 8 | Example 9 | Comparative example 6 | Example 10 | Example 11 | Comparative example 7 |
|---|---|---|---|---|---|---|---|---|---|
| fuzzing | pieces/m | S(10) | S(10) | S(10) | S(10) | B(35) | S(10) | S(10) | S(15) |
| IFSS (sizing agent-coated carbon fiber bundle after 50-second rinsing) | MPa | A(39) | A(38) | A(39) | A(38) | A(39) | A(39) | A(38) | B(37) |
| IFSS (sizing agent-coated carbon fiber bundle after 25-second rinsing) | MPa | A(39) | A(38) | A(38) | B(37) | A(39) | A(38) | B(37) | B(37) |

(Example 7)

Except that the surface treatment in the first step was performed with an electric charge of 40 coulombs per gram and that the sizing agent used in the second step contained the components shown in Table 2, the same procedure as in Example 1 was carried out to produce a sizing agent-coated carbon fiber bundle, which was then subjected to various evaluations. Results are summarized in Table 2 and they show that the carbon fiber bundle had a high handleability and also had a sufficiently high solubility.

(Examples 8 and 9)

Except that in the second step, the sizing agent used contained the components shown in Table 2 and that the sizing agent was applied in the quantity shown there, the same procedure as in Example 1 was carried out to produce a sizing agent-coated carbon fiber bundle, which was then subjected to various evaluations. Results are summarized in Table 2 and they show that the carbon fiber bundle had a high handleability and also had a sufficiently high solubility.

(Comparative example 6)

Except that in the second step, the sizing agent used contained the components shown in Table 2 and that the sizing agent was applied in the amount shown there, the same procedure as in Example 1 was carried out to produce a sizing agent-coated carbon fiber bundle, which was then subjected to various evaluations. Results are summarized in Table 2 and they show that the carbon fiber bundle had a high dry F-F friction coefficient and failed to have a sufficiently high handleability.

(Examples 10 and 11)

Except that in the second step, the sizing agent used contained the components shown in Table 2, the same procedure as in Example 1 was carried out to produce a sizing agent-coated carbon fiber bundle, which was then subjected to various evaluations. Results are summarized in Table 2 and they show that the carbon fiber bundle had a high handleability and also had a sufficiently high solubility.

(Comparative example 7)

Except that in the second step, the sizing agent used contained the components shown in Table 2 and that the sizing agent was applied in the amount shown there, the same procedure as in Example 1 was carried out to produce a sizing agent-coated carbon fiber bundle, which was then subjected to various evaluations. Results are summarized in Table 2 and they show that the carbon fiber bundle had a high handleability, but failed to be sufficiently high in hydrophilicity and solubility.

(Example 12)

Except that in the second step, the sizing agent used contained the components shown in Table 3 and that the sizing agent was applied in the quantity shown there, the same procedure as in Example 1 was carried out to produce a sizing agent-coated carbon fiber bundle, which was then subjected to various evaluations. Results are summarized in Table 3 and they show that the carbon fiber bundle had a high handleability and also had a sufficiently high solubility.

[Table 3]

Table 3

| | unit | Example 12 | Example 13 | Comparative example 8 | Comparative example 9 | Example 14 | Example 15 | Comparative example 10 | Example 16 | Example 17 | Example 18 |
|---|---|---|---|---|---|---|---|---|---|---|---|
| strand strength | GPa | 5.1 | 5.1 | 5.1 | 5.1 | 5.1 | 5.1 | 5.1 | 5.1 | 5.1 | 5.1 |
| strand elastic modulus | GPa | 240 | 240 | 240 | 240 | 240 | 240 | 240 | 240 | 240 | 240 |
| surface oxygen concentration | - | 0.21 | 0.21 | 0.21 | 0.21 | 0.21 | 0.14 | 0.21 | 0.21 | 0.21 | 0.21 |
| compound | - | B-1 | B-1 | B-1 | B-1 | B-1 | B-1 | B-2 | B-3 | B-4 | B-5 |
| type of surface active agent | - | anionic | anionic | anionic | anionic | anionic | anionic | anionic | anionic | anionic | anionic |
| hydrophilic group ratio in anion | % | 19 | 19 | 19 | 19 | 19 | 19 | 15 | 26 | 25 | 30 |
| total quantity of surface active agent | parts by mass | 100 | 100 | 100 | 100 | 100 | 100 | 100 | 100 | 100 | 100 |
| anion surface active agent relative to total quantity of surface active agent | parts by mass | 100 | 100 | 100 | 100 | 100 | 100 | 100 | 100 | 100 | 100 |
| type of second component | - | - | - | - | - | - | - | - | - | - | - |
| second component relative to total quantity of sizing agent | parts by mass | - | - | - | - | - | - | - | - | - | - |
| weight average molecular weight Mw of anionic surface active agent | - | 445 | 445 | 445 | 445 | 445 | 445 | 456 | 270 | 349 | 288 |

(continued)

| | unit | Example 12 | Example 13 | Comparative example 8 | Comparative example 9 | Example 14 | Example 15 | Comparative example 10 | Example 16 | Example 17 | Example 18 |
|---|---|---|---|---|---|---|---|---|---|---|---|
| quantity of sizing agent | parts by mass | 0.40 | 0.40 | 0.40 | 0.08 | 0.70 | 0.40 | 0.25 | 0.30 | 0.25 | 0.30 |
| quantity of sizing agent after 50-second rinsing | parts by mass | 0.03 | 0.03 | 0.03 | 0.03 | 0.04 | 0.03 | 0.23 | 0.03 | 0.05 | 0.03 |
| quantity of sizing agent after 25-second rinsing | parts by mass | 0.06 | 0.06 | 0.06 | 0.04 | 0.11 | 0.06 | 0.23 | 0.06 | 0.06 | 0.05 |
| dry F-F friction coefficient | - | 0.37 | 0.39 | 0.41 | 0.41 | 0.36 | 0.36 | 0.33 | 0.39 | 0.30 | 0.35 |
| wet F-M friction coefficient | - | 0.26 | 0.25 | 0.25 | 0.26 | 0.26 | 0.24 | 0.26 | 0.25 | 0.22 | 0.25 |
| residue mass fraction at 300°C | % | 25 | 25 | 25 | 25 | 25 | 25 | 41 | 93 | 93 | 27.5 |
| residue mass fraction at 350°C | % | 17 | 17 | 17 | 17 | 17 | 17 | 26 | 60 | 89 | 26 |
| drying temperature in second drying step | °C | 210 | 150 | 80 | 210 | 210 | 210 | 210 | 210 | 210 | 210 |
| fuzz | pieces/m | S(15) | A(20) | B(30) | B(35) | S(10) | S(13) | A(24) | A(20) | A(20) | S(10) |
| IFSS (sizing agent-coated carbon fiber bundle after 50-second rinsing) | MPa | A(39) | A(39) | A(39) | A(39) | A(39) | A(38) | B(36) | A(39) | A(39) | A(39) |
| IFSS (sizing agent-coated carbon fiber bundle after 25-second rinsing) | MPa | A(39) | A(39) | A(39) | A(39) | A(38) | A(38) | B(36) | A(38) | A(38) | A(39) |

(Example 13)

Except that in the second step, the drying temperature in the second drying step was 150°C, the same procedure as in Example 12 was carried out to produce a sizing agent-coated carbon fiber bundle, which was then subjected to various evaluations. Results are summarized in Table 3 and they show that the carbon fiber bundle had a high handleability and also had a sufficiently high solubility.

(Comparative example 8)

Except that in the second step, the drying temperature in the second drying step was 80°C, the same procedure as in Example 12 was carried out to produce a sizing agent-coated carbon fiber bundle, which was then subjected to various evaluations. Results are summarized in Table 3 and they show that the carbon fiber bundle had a sufficiently high solubility, but was so high in dry F-F friction coefficient that it failed to have a sufficiently high handleability.

(Comparative example 9)

Except that in the second step, the sizing agent was applied in the quantity shown in Table 3, the same procedure as in Example 12 was carried out to produce a sizing agent-coated carbon fiber bundle, which was then subjected to various evaluations. Results are summarized in Table 3 and they show that the carbon fiber bundle had a sufficiently high solubility, but was so high in dry F-F friction coefficient that it failed to have a sufficiently high handleability.

(Example 14)

Except that in the second step, the sizing agent was applied in the amount shown in Table 3, the same procedure as in Example 12 was carried out to produce a sizing agent-coated carbon fiber bundle, which was then subjected to various evaluations. Results are summarized in Table 3 and they show that the carbon fiber bundle had a high handleability and also had a sufficiently high solubility.

(Example 15)

Except that the surface treatment in the first step was performed with an electric charge of 40 coulombs per gram and that in the second step, the sizing agent was applied in the quantity shown in Table 3, the same procedure as in Example 12 was carried out to produce a sizing agent-coated carbon fiber bundle, which was then subjected to various evaluations. Results are summarized in Table 3 and they show that the carbon fiber bundle had a high handleability and also had a sufficiently high solubility.

(Comparative example 10)

Except that in the second step, the sizing agent used contained the components shown in Table 3 and was applied in the quantity shown there, the same procedure as in Example 12 was carried out to produce a sizing agent-coated carbon fiber bundle, which was then subjected to various evaluations. Results are summarized in Table 1 and they show that the carbon fiber bundle had a high handleability, but the anion of the anionic surface active agent had a low hydrophilic group ratio, leading to an insufficient solubility.

(Examples 16 to 18)

Except that in the second step, the sizing agent used contained the components shown in Table 3 and was applied in the amount shown there, the same procedure as in Example 12 was carried out to produce a sizing agent-coated carbon fiber bundle, which was then subjected to various evaluations. Results are summarized in Table 3 and they show that the carbon fiber bundle had a high handleability and also had a sufficiently high solubility.

(Examples 19, 20 and 22; Reference Example 21)

Except that in the second step, the sizing agent used contained the components shown in Table 3 and was applied in the amount shown there, the same procedure as in Example 12 was carried out to produce a sizing agent-coated carbon fiber bundle, which was then subjected to various evaluations. Results are summarized in Table 4 and they show that the carbon fiber bundle had a high handleability and also had a sufficiently high solubility.
Example 21 in Table 4 is a Reference Example.

[Table 4]

[Table 4]

[Table 4]

| | unit | Example 19 | Example 20 | Example 21 | Example 22 | Example 23 | Example 24 | Example 25 | Example 26 |
|---|---|---|---|---|---|---|---|---|---|
| strand strength | GPa | 5.1 | 5.1 | 5.1 | 5.1 | 5.1 | 5.1 | 5.1 | 5.1 |
| strand elastic modulus | GPa | 240 | 240 | 240 | 240 | 240 | 240 | 240 | 240 |
| surface oxygen concentration | - | 0.21 | 0.21 | 0.21 | 0.21 | 0.21 | 0.21 | 0.21 | 0.21 |
| compound | - | B-6 | B-6 | B-6 | B-7 | B-1 | B-1 | B-6 | B-6 |
| type of surface active agent | - | anionic | anionic | anionic | anionic | anionic | anionic | anionic | anionic |
| hydrophilic group ratio in anion | % | 34 | 34 | 34 | 46 | 19 | 19 | 19 | 19 |
| total quantity of surface active agent | parts by mass | 100 | 100 | 100 | 100 | 77 | 83 | 50 | 50 |
| anionic surface active agent relative to total quantity of surface active agent | parts by mass | 100 | 100 | 100 | 100 | 100 | 100 | 100 | 100 |
| type of second component | - | - | - | - | - | D-1 | D-2 | E-2 | E-3 |
| second component relative to total quantity of sizing agent | parts by mass | - | - | - | - | 23 | 17 | 50 | 50 |
| weight average molecular weight Mw of anionic surface active agent | - | 410 | 410 | 410 | 232 | 445 | 445 | 410 | 410 |
| quantity of sizing agent | parts by mass | 0.30 | 0.80 | 1.00 | 0.20 | 0.40 | 0.40 | 0.50 | 0.50 |
| quantity of sizing agent after 50-second rinsing | parts by mass | 0.05 | 0.05 | 0.07 | 0.05 | 0.05 | 0.07 | 0.12 | 0.10 |
| quantity of sizing agent after 25-second rinsing | parts by mass | 0.07 | 0.11 | 0.13 | 0.09 | 0.09 | 0.10 | 0.16 | 0.14 |
| dry F-F friction coefficient | - | 0.26 | 0.26 | 0.25 | 0.39 | 0.30 | 0.32 | 0.36 | 0.26 |
| wet F-M friction coefficient | - | 0.21 | 0.21 | 0.21 | 0.25 | 0.24 | 0.25 | 0.24 | 0.23 |
| residue mass fraction at 300°C | % | 75 | 75 | 75 | 34 | 17 | 25 | 38 | 38 |
| residue mass fraction at 350°C | % | 50 | 50 | 50 | 33 | 14 | 17 | 29 | 24 |

| | unit | Example 19 | Example 20 | Example 21 | Example 22 | Example 23 | Example 24 | Example 25 | Example 26 |
|---|---|---|---|---|---|---|---|---|---|
| drying temperature in second drying step | °C | 210 | 210 | 210 | 210 | 210 | 210 | 210 | 210 |
| fuzz | pieces/m | S(10) | S(10) | S(10) | A(23) | S(8) | S(9) | S(15) | S(10) |
| IFSS (sizing agent-coated carbon fiber bundle after 50-second rinsing) | MPa | A(39) | A(39) | A(38) | A(39) | A(39) | A(39) | A(38) | A(38) |
| IFSS (sizing agent-coated carbon fiber bundle after 25-second rinsing) | MPa | A(38) | A(38) | B(37) | A(38) | A(38) | A(38) | B(37) | B(37) |

(Example 23)

Except that in the second step, the sizing agent was applied in the quantity shown in Table 4 and that (D-1) was added as the second component in the proportion shown in Table 4 relative to the total quantity of the sizing agent, the same procedure as in Example 12 was carried out to produce a sizing agent-coated carbon fiber bundle, which was then subjected to various evaluations. Results are summarized in Table 4 and they show that the carbon fiber bundle had a high handleability and also had a sufficiently high solubility.

(Example 24)

Except that in the second step, the sizing agent was applied in the quantity shown in Table 4 and that (D-2) was added as the second component in the proportion shown in Table 4 relative to the total quantity of the sizing agent, the same procedure as in Example 12 was carried out to produce a sizing agent-coated carbon fiber bundle, which was then subjected to various evaluations. Results are summarized in Table 4 and they show that the carbon fiber bundle had a high handleability and also had a sufficiently high solubility.

(Example 25)

Except that in the second step, the sizing agent was applied in the quantity shown in Table 4 and that (E-2) was added as the second component in the proportion shown in Table 4 relative to the total quantity of the sizing agent, the same procedure as in Example 12 was carried out to produce a sizing agent-coated carbon fiber bundle, which was then subjected to various evaluations. Results are summarized in Table 4 and they show that the carbon fiber bundle had a high handleability and also had a sufficiently high solubility.

(Example 26)

Except that in the second step, the sizing agent was applied in the quantity shown in Table 4 and that (E-3) was added as the second component in the proportion shown in Table 4 relative to the total quantity of the sizing agent, the same procedure as in Example 12 was carried out to produce a sizing agent-coated carbon fiber bundle, which was then subjected to various evaluations. Results are summarized in Table 4 and they show that the carbon fiber bundle had a high handleability and also had a sufficiently high solubility.

(Example 27)

Except that in the second step, the sizing agent was applied in the quantity shown in Table 5, the same procedure as in Example 1 was carried out to produce a sizing agent-coated carbon fiber bundle, which was then subjected to various evaluations. Results are summarized in Table 5 and they show that the carbon fiber bundle had a high handleability and also had a sufficiently high solubility.

[Table 5]

Table 5

| | unit | Example 27 | Example 28 | Example 29 | Example 30 | Example 31 | Example 32 | Example 33 | Example 34 | Comparative example 11 | Comparative example 12 | Comparative example 13 | Comparative example 14 |
|---|---|---|---|---|---|---|---|---|---|---|---|---|---|
| strand strength | GPa | 5.1 | 5.1 | 5.1 | 5.1 | 5.1 | 5.1 | 5.1 | 5.1 | 5.1 | 5.1 | 5.1 | 5.1 |
| strand elastic modulus | GPa | 240 | 240 | 240 | 240 | 240 | 240 | 240 | 240 | 240 | 240 | 240 | 240 |
| surface oxygen concentration | - | 0.21 | 0.21 | 0.21 | 0.21 | 0.21 | 0.21 | 0.21 | 0.21 | 0.21 | 0.21 | 0.21 | 0.21 |
| compound | - | C-1 | C-1 | C-1 | C-2 | C-2 | C-3 | C-4 | C-5 | C-1 | C-1 | C-2 | C-6 |
| type of surface active agent | - | amphoteric | amphoteric | amphoteric | amphoteric | amphoteric | amphoteric | amphoteric | amphoteric | amphoteric | amphoteric | amphoteric | amphoteric |
| number of carbon atoms in alkyl group | % | 12 | 12 | 12 | 13 | 13 | 10 | 12 | 14 | 12 | 12 | 13 | 18 |
| total quantity of surface active agent | parts by mass | 100 | 100 | 100 | 100 | 100 | 100 | 100 | 100 | 100 | 100 | 100 | 100 |
| amphoteric surface active agent relative to total quantity of surface active agent | parts by mass | 100 | 100 | 100 | 100 | 100 | 100 | 100 | 100 | 100 | 100 | 100 | 100 |

EP 4 047 126 B1

31

| | unit | Example 27 | Example 28 | Example 29 | Example 30 | Example 31 | Example 32 | Example 33 | Example 34 | Comparative example 11 | Comparative example 12 | Comparative example 13 | Comparative example 14 |
|---|---|---|---|---|---|---|---|---|---|---|---|---|---|
| weight average molecular weight Mw of amphoteric surface active agent | - | 271 | 271 | 271 | 400 | 400 | 201 | 229 | 257 | 271 | 271 | 400 | 257 |
| quantity of sizing agent | parts by mass | 0.20 | 0.30 | 0.40 | 0.20 | 0.40 | 0.45 | 0.45 | 0.45 | 0.09 | 0.85 | 0.20 | 0.20 |
| quantity of sizing agent after 50-second rinsing | parts by mass | 0.11 | 0.12 | 0.12 | 0.09 | 0.11 | 0.08 | 0.10 | 0.12 | 0.03 | 0.17 | 0.11 | 0.14 |
| dry F-F friction coefficient | - | 0.29 | 0.28 | 0.27 | 0.39 | 0.39 | 0.27 | 0.23 | 0.25 | 0.41 | 0.27 | 0.41 | 0.26 |
| wet F-M friction coefficient | - | 0.17 | 0.17 | 0.17 | 0.2 | 0.2 | 0.23 | 0.19 | 0.18 | 0.16 | 0.18 | 0.2 | 0.17 |
| residue mass fraction at 300°C | % | 24 | 24 | 24 | 76 | 76 | 2 | 2 | 1 | 24 | 24 | 76 | 28 |
| residue mass fraction at 350°C | % | 21 | 21 | 21 | 62 | 62 | 2 | 2 | 1 | 21 | 21 | 62 | 16 |
| absorbance of water extract | Abs. | 0.10 | 0.10 | 0.10 | 0.05 | 0.05 | 0.01 | 0.02 | 0.02 | 0.05 | 0.05 | 0.05 | 0.06 |

| | unit | Example 27 | Example 28 | Example 29 | Example 30 | Example 31 | Example 32 | Example 33 | Example 34 | Comparative example 11 | Comparative example 12 | Comparative example 13 | Comparative example 14 |
|---|---|---|---|---|---|---|---|---|---|---|---|---|---|
| drying temperature in second drying step | °C | 210 | 210 | 210 | 210 | 210 | - | - | - | 210 | 210 | 210 | 210 |
| fuzz | pieces/m | S(15) | S(10) | S(10) | S(15) | S(15) | S(10) | S(10) | S(10) | B(35) | S(10) | B(35) | S(10) |
| IFSS (sizing agent-coated carbon fiber bundle after 50-second rinsing) | MPa | A(39) | A(39) | A(39) | A(38) | A(38) | A(38) | A(38) | A(38) | A(39) | B(36) | A(38) | B(37) |

(Examples 28 and 29)

Except that in the second step, the sizing agent was applied in the amount shown in Table 5, the same procedure as in Example 27 was carried out to produce a sizing agent-coated carbon fiber bundle, which was then subjected to various evaluations. Results are summarized in Table 5 and they show that the carbon fiber bundle had a high handleability and also had a sufficiently high solubility.

(Examples 30 and 31)

Except that in the second step, (C-2) was used as the compound (C) and that the sizing agent was applied in the quantity shown in Table 5, the same procedure as in Example 27 was carried out to produce a sizing agent-coated carbon fiber bundle, which was then subjected to various evaluations. Results are summarized in Table 5 and they show that the carbon fiber bundle had a high handleability and also had a sufficiently high solubility.

(Example 32)

Except that in the second step, (C-3) was used as the compound (C), that the sizing agent was applied in the quantity shown in Table 5, and that heat treatment was performed on a hot roller at a temperature of 120°C for 15 seconds as a preliminary drying step, without subsequently carrying out a second drying step, the same procedure as in Example 27 was carried out to produce a sizing agent-coated carbon fiber bundle, which was then subjected to various evaluations. Results are summarized in Table 5 and they show that the carbon fiber bundle had a high handleability and also had a sufficiently high solubility.

(Example 33)

Except that in the second step, (C-4) was used as the compound (C), that the sizing agent was applied in the amount shown in Table 5, and that heat treatment was performed on a hot roller at a temperature of 120°C for 15 seconds as a preliminary drying step, without subsequently carrying out a second drying step, the same procedure as in Example 27 was carried out to produce a sizing agent-coated carbon fiber bundle, which was then subjected to various evaluations. Results are summarized in Table 5 and they show that the carbon fiber bundle had a high handleability and also had a sufficiently high solubility.

(Example 34)

Except that in the second step, (C-5) was used as the compound (C), that the sizing agent was applied in the amount shown in Table 5, and that heat treatment was performed on a hot roller at a temperature of 120°C for 15 seconds as a preliminary drying step, without subsequently carrying out a second drying step, the same procedure as in Example 27 was carried out to produce a sizing agent-coated carbon fiber bundle, which was then subjected to various evaluations. Results are summarized in Table 5 and they show that the carbon fiber bundle had a high handleability and also had a sufficiently high solubility.

(Comparative example 11)

Except that in the second step, the sizing agent was applied in the amount shown in Table 5, the same procedure as in Example 25 was carried out to produce a sizing agent-coated carbon fiber bundle, which was then subjected to various evaluations. Results are summarized in Table 1 and they show that the carbon fiber bundle had a high dry F-F friction coefficient and failed to have a sufficiently high handleability.

(Comparative example 12)

Except that in the second step, the sizing agent was applied in the amount shown in Table 5, the same procedure as in Example 25 was carried out to produce a sizing agent-coated carbon fiber bundle, which was then subjected to various evaluations. Results are summarized in Table 1 and they show that fiber bundle had a high handleability, but the quantity of the persisting sizing agent was large, leading to an insufficient solubility.

(Comparative example 13)

Except that in the second step, (C-2) was used as the compound (C) and that the sizing agent was applied in the quantity shown in Table 5, the same procedure as in Example 25 was carried out to produce a sizing agent-coated carbon fiber bundle, which was then subjected to various evaluations. Results are summarized in Table 5 and they show that the carbon fiber bundle had a high dry F-F friction coefficient and failed to have a sufficiently high handleability.

(Comparative example 14)

Except that in the second step, (C-6) was used as the compound (C) and that the sizing agent was applied in the quantity shown in Table 5, the same procedure as in Example 25 was carried out to produce a sizing agent-coated carbon fiber bundle, which was then subjected to various evaluations. Results are summarized in Table 5 and they show that the alkyl group contained many carbon atoms and the carbon fiber bundle failed to have a sufficiently high solubility.

INDUSTRIAL APPLICABILITY

The present invention can provide a sizing agent-coated carbon fiber bundle characterized in that the sizing agent-coated carbon fiber bundle shows a high handleability while the sizing agent on carbon fiber bundle shows a favorable solubility in water in the rinsing step so that the transfer of the sizing agent into the matrix resin is decreased to ensure suitable properties. Thermoplastic resin composites produced on the basis of the present invention are high in strength though light in weight, and accordingly, they can be used suitably in many fields including aircraft members, spacecraft members, automobile members, ship members, civil engineering/construction materials, and sporting goods.

EXPLANATION OF NUMERALS

11: winding out step
12: rinsing step
13: drying step
14: winding up step
15: free roller before rinsing tank
16: free roller in rinsing tank
17: free roller after rinsing tank
18: rinsing tank
19: free roller before rinsing tank
20: free roller in rinsing tank
21: free roller after rinsing tank
22: rinsing tank
1a: sizing agent-coated carbon fiber bundle
1b: sizing agent-coated carbon fiber bundle after rinsing
1c: sizing agent-coated carbon fiber bundle after rinsing and drying
1d: water
1e: water

**Claims**

1. A sizing agent-coated carbon fiber bundle comprising a carbon fiber bundle coated with a sizing agent containing polyethylene glycol and/or a surface active agent and satisfying all of the following requirements (i) to (iii):

    (i) the sizing agent applied accounts for 0.15 part by mass or more and 0.80 part by mass or less relative to 100 parts by mass of the sizing agent-coated carbon fiber bundle,
    (ii) the dry F-F friction coefficient is 0.39 or less, and
    (iii) the quantity of the sizing agent persisting after rinsing for 50 seconds under the conditions specified in the present Description accounts for 0.12 part by mass or less relative to 100 parts by mass of the sizing agent-coated carbon fiber bundle.

2. A sizing agent-coated carbon fiber bundle as set forth in claim 1, wherein the wet F-M friction coefficient is 0.28 or less.

3. A sizing agent-coated carbon fiber bundle as set forth in either claim 1 or 2, wherein the quantity of the sizing agent persisting after rinsing for 25 seconds under the conditions specified in the present Description accounts for 0.12 part by mass or less relative to 100 parts by mass of the sizing agent-coated carbon fiber bundle.

4. A sizing agent-coated carbon fiber bundle as set forth in any one of claims 1 to 3, wherein the total quantity of the surface active agent accounts for 70 parts by mass or more relative to the total quantity, i.e. 100 parts by mass, of the sizing agent.

5. A sizing agent-coated carbon fiber bundle as set forth in any one of claims 1 to 4, wherein the total quantity of the surface active agent accounts for 70 parts by mass or more relative to the total quantity, i.e. 100 parts by mass, of the sizing agent and also wherein the polyethylene glycol and/or nonionic surface active agent account for 50 parts by mass or more relative to the total quantity, i.e. 100 parts by mass, of the surface active agents.

6. A sizing agent-coated carbon fiber bundle as set forth in any one of claims 1 to 5, wherein the polyethylene glycol and/or nonionic surface active agent satisfy either of the following requirements (vi) and (v):

   (vi) HLB is 15 or more and 20 or less, and
   (v) HLB is 12 or more and less than 15 while the chain-end hydroxyl group ratio is 50% or more.

7. A sizing agent-coated carbon fiber bundle as set forth in any one of claims 1 to 6, wherein the polyethylene glycol and/or nonionic surface active agent have a weight average molecular weight Mw of 300 or more and 5,000 or less.

8. A sizing agent-coated carbon fiber bundle as set forth in any one of claims 1 to 4, wherein the total quantity of the surface active agents accounts for 70 parts by mass or more relative to the total quantity, i.e. 100 parts by mass, of the sizing agent and also wherein the anionic surface active agent account for 50 parts by mass or more relative to the total quantity, i.e. 100 parts by mass, of the surface active agents.

9. A sizing agent-coated carbon fiber bundle as set forth in any one of claims 1 to 4, and 8, wherein in addition to the polyethylene glycol and/or surface active agent, an aliphatic or alicyclic compound containing one hydroxyl group bonded to a carbon atom and/or an aliphatic or alicyclic compound containing two hydroxyl groups bonded to two different carbon atoms are contained and account for 0.1 part by mass or more and 30 parts by mass or less relative to the total quantity, i.e. 100 parts by mass, of the sizing agent.

10. A sizing agent-coated carbon fiber bundle as set forth in any one of claims 1 to 4, 8, and 9, wherein the quantity of the applied sizing agent accounts for 0.30 part by mass or more and 0.45 part by mass or less relative to 100 parts by mass of the sizing agent-coated carbon fibers.

11. A sizing agent-coated carbon fiber bundle as set forth in any one of claims 1 to 4, and 8 to 10, wherein the hydrophilic group ratio in the anion in the anionic surface active agent is 17% or more.

12. A sizing agent-coated carbon fiber bundle as set forth in any one of claims 1 to 4, and 8 to 11, wherein the quantity of the sizing agent persisting after rinsing for 50 seconds under the conditions specified in the present Description accounts for 0.08 part by mass or less relative to 100 parts by mass of the sizing agent-coated carbon fiber bundle.

13. A sizing agent-coated carbon fiber bundle as set forth in any one of claims 1, 2, and 4, wherein the total quantity of the surface active agents accounts for 70 parts by mass or more relative to the total quantity, i.e. 100 parts by mass, of the organic components of the sizing agent and also wherein the anionic surface active agent accounts for 50 parts by mass or more relative to the total quantity, i.e. 100 parts by mass, of the surface active agents.

14. A sizing agent-coated carbon fiber bundle as set forth in any one of claims 1 to 4, and 13, wherein the quantity of the applied sizing agent accounts for 0.25 part by mass or more and 0.45 part by mass or less relative to 100 parts by mass of the sizing agent-coated carbon fibers.

15. A sizing agent-coated carbon fiber bundle as set forth in any one of claims 4, 13, and 14, wherein the alkyl group in the amphoteric surface active agent contains 17 or less carbon atoms on average.

16. A sizing agent-coated carbon fiber bundle as set forth in any one of claims 1, 2, 4, and 13 to 15, wherein after one minute extraction with distilled water, the carbon fiber bundle gives an extract having an absorbance of 0.06 or more at 600 nm.

17. A sizing agent-coated carbon fiber bundle as set forth in any one of claims 1 to 16, wherein when the polyethylene glycol and/or surface active agent are heated in air at a rate of 10°C/min, the residue mass fraction measured at the time when the temperature reaches 300°C is 35% or less.

18. A sizing agent-coated carbon fiber bundle as set forth in any one of claims 1 to 17, wherein when the polyethylene glycol and/or surface active agent are heated in air at a rate of 10°C/min, the residue mass fraction measured at the time when the temperature reaches 350°C is 30% or less.

19. A sizing agent-coated carbon fiber bundle as set forth in any one of claims 1 to 18, wherein the carbon fiber bundle has a strand strength of 4.0 GPa or more.

20. A production method for a sizing agent-coated carbon fiber bundle designed to produce a sizing agent-coated carbon fiber bundle as set forth in any one of claims 1 to 19 comprising a step for coating a carbon fiber bundle with a sizing agent containing polyethylene glycol and/or a surface active agent and a subsequent drying step for drying the sizing agent-coated carbon fiber bundle at 120°C to 260°C.

**Patentansprüche**

1. Mit einem Schlichtungsmittel beschichtetes Kohlenstofffaserbündel, umfassend ein Kohlenstofffaserbündel, das mit einem Schlichtungsmittel beschichtet ist, das Polyethylenglykol und/oder ein oberflächenaktives Agens enthält und alle der folgenden Anforderungen (i) bis (iii) erfüllt:

(i) Das aufgetragene Schlichtungsmittel macht 0,15 Massenanteile oder mehr und 0,80 Massenanteile oder weniger relativ zu 100 Massenanteilen des mit Schlichtungsmittel beschichteten Kohlenstofffaserbündels aus,
(ii) Der Trockenreibungskoeffizient F-F beträgt 0,39 oder weniger, und
(iii) Die Menge des Schlichtungsmittels, das nach 50 Sekunden Spülen unter den in der vorliegenden Beschreibung festgelegten Bedingungen bestehen bleibt, beträgt 0,12 Massenanteile oder weniger relativ zu 100 Massenanteilen des mit Schlichtungsmittel beschichteten Kohlenstofffaserbündels.

2. Mit einem Schlichtungsmittel beschichtetes Kohlenstofffaserbündel gemäß Anspruch 1, wobei der Nassreibungskoeffizient F-M 0,28 oder weniger beträgt.

3. Mit einem Schlichtungsmittel beschichtetes Kohlenstofffaserbündel gemäß Anspruch 1 oder 2, wobei die Menge des Schlichtungsmittels, das nach 25 Sekunden Spülen unter den in der vorliegenden Beschreibung festgelegten Bedingungen bestehen bleibt, 0,12 Massenanteile oder weniger relativ zu 100 Massenanteilen des mit Schlichtungsmittel beschichteten Kohlenstofffaserbündels beträgt.

4. Mit einem Schlichtungsmittel beschichtetes Kohlenstofffaserbündel gemäß einem der Ansprüche 1 bis 3, wobei die Gesamtmenge des oberflächenaktiven Agens 70 Massenanteile oder mehr relativ zur Gesamtmenge, d. h. 100 Massenanteile, des Schlichtungsmittels beträgt.

5. Mit einem Schlichtungsmittel beschichtetes Kohlenstofffaserbündel gemäß einem der Ansprüche 1 bis 4, wobei die Gesamtmenge des oberflächenaktiven Agens 70 Massenanteile oder mehr relativ zur Gesamtmenge, d. h. 100 Massenanteile, des Schlichtungsmittels beträgt und außerdem das Polyethylenglykol und/oder nicht-ionische oberflächenaktives Agens 50 Massenanteile oder mehr relativ zur Gesamtmenge, d. h. 100 Massenanteile, der oberflächenaktiven Agenzien ausmacht.

6. Mit einem Schlichtungsmittel beschichtetes Kohlenstofffaserbündel gemäß einem der Ansprüche 1 bis 5, wobei das Polyethylenglykol und/oder nicht-ionische oberflächenaktive Agens eine der folgenden Anforderungen (vi) und (v) erfüllt:

(vi) Der HLB-Wert beträgt 15 oder mehr und 20 oder weniger, und
(v) Der HLB-Wert beträgt 12 oder mehr und weniger als 15, während der Anteil der Kettenend-Hydroxylgruppen 50 % oder mehr beträgt.

7. Mit einem Schlichtungsmittel beschichtetes Kohlenstofffaserbündel gemäß einem der Ansprüche 1 bis 6, wobei das Polyethylenglykol und/oder nicht-ionische oberflächenaktive Agens ein gewichtsmittleres Molekulargewicht Mw von 300 oder mehr und 5.000 oder weniger aufweisen.

8. Mit einem Schlichtungsmittel beschichtetes Kohlenstofffaserbündel gemäß einem der Ansprüche 1 bis 4, wobei die Gesamtmenge der oberflächenaktiven Agenzien 70 Massenanteile oder mehr relativ zur Gesamtmenge, d. h. 100 Massenanteile, des Schlichtungsmittels beträgt und außerdem das anionische oberflächenaktive Agens 50 Massenanteile oder mehr relativ zur Gesamtmenge, d. h. 100 Massenanteile, der oberflächenaktiven Agenzien ausmacht.

9. Mit einem Schlichtungsmittel beschichtetes Kohlenstofffaserbündel gemäß einem der Ansprüche 1 bis 4, und 8, wobei zusätzlich zu dem Polyethylenglykol und/oder oberflächenaktiven Agens eine aliphatische oder alicyclische Verbindung, die eine Hydroxylgruppe enthält, die an ein Kohlenstoffatom gebunden ist, und/oder eine aliphatische oder alicyclische Verbindung, die zwei Hydroxylgruppen enthält, die an zwei verschiedene Kohlenstoffatome gebunden sind, enthalten ist / sind und 0,1 Massenanteile oder mehr und 30 Massenanteile oder weniger relativ zur Gesamtmenge, d. h. 100 Massenanteile, des Schlichtungsmittels ausmacht / ausmachen.

10. Mit einem Schlichtungsmittel beschichtetes Kohlenstofffaserbündel gemäß einem der Ansprüche 1 bis 4, 8 und 9, wobei die Menge des aufgetragenen Schlichtungsmittels 0,30 Massenanteile oder mehr und 0,45 Massenanteile oder weniger relativ zu 100 Massenanteilen der mit Schlichtungsmittel beschichteten Kohlenstofffasern ausmacht.

11. Mit einem Schlichtungsmittel beschichtetes Kohlenstofffaserbündel gemäß einem der Ansprüche 1 bis 4 und 8 bis 10, wobei das Verhältnis der hydrophilen Gruppe im Anion des anionischen oberflächenaktiven Agens 17 % oder mehr beträgt.

12. Mit einem Schlichtungsmittel beschichtetes Kohlenstofffaserbündel gemäß einem der Ansprüche 1 bis 4, und 8 bis 11, wobei die Menge des Schlichtungsmittels, das nach 50 Sekunden Spülen unter den in der vorliegenden Beschreibung festgelegten Bedingungen bestehen bleibt, 0,08 Massenanteile oder weniger relativ zu 100 Massenanteilen des mit Schlichtungsmittel beschichteten Kohlenstofffaserbündels beträgt.

13. Mit einem Schlichtungsmittel beschichtetes Kohlenstofffaserbündel gemäß einem der Ansprüche 1, 2 und 4, wobei die Gesamtmenge der oberflächenaktiven Agenzien 70 Massenanteile oder mehr relativ zur Gesamtmenge, d. h. 100 Massenanteile, der organischen Bestandteile des Schlichtungsmittels beträgt und außerdem das anionische oberflächenaktive Agens 50 Massenanteile oder mehr relativ zur Gesamtmenge, d. h. 100 Massenanteile, der oberflächenaktiven Agenzien ausmacht.

14. Mit einem Schlichtungsmittel beschichtetes Kohlenstofffaserbündel gemäß einem der Ansprüche 1 bis 4, und 13, wobei die Menge des aufgetragenen Schlichtungsmittels 0,25 Massenanteile oder mehr und 0,45 Massenanteile oder weniger relativ zu 100 Massenanteilen der mit Schlichtungsmittel beschichteten Kohlenstofffasern ausmacht.

15. Mit einem Schlichtungsmittel beschichtetes Kohlenstofffaserbündel gemäß einem der Ansprüche 4, 13 und 14, wobei die Alkylgruppe im amphoteren oberflächenaktiven Agens im Durchschnitt 17 oder weniger Kohlenstoffatome enthält.

16. Mit einem Schlichtungsmittel beschichtetes Kohlenstofffaserbündel gemäß einem der Ansprüche 1, 2, 4, und 13 bis 15, wobei das Kohlenstofffaserbündel nach einer einminütigen Extraktion mit destilliertem Wasser einen Extrakt ergibt, der bei 600 nm eine Absorbanz von 0,06 oder mehr aufweist.

17. Mit einem Schlichtungsmittel beschichtetes Kohlenstofffaserbündel gemäß einem der Ansprüche 1 bis 16, wobei, wenn das Polyethylenglykol und/oder oberflächenaktive Agens in Luft mit einer Rate von 10 °C/min erhitzt werden, der Massenanteil des Rückstands bei Erreichen einer Temperatur von 300 °C 35 % oder weniger beträgt.

18. Mit einem Schlichtungsmittel beschichtetes Kohlenstofffaserbündel gemäß einem der Ansprüche 1 bis 17, wobei, wenn das Polyethylenglykol und/oder oberflächenaktive Agens in Luft mit einer Rate von 10 °C/min erhitzt wird / werden, der Massenanteil des Rückstands bei Erreichen einer Temperatur von 350 °C 30 % oder weniger beträgt.

19. Mit einem Schlichtungsmittel beschichtetes Kohlenstofffaserbündel gemäß einem der Ansprüche 1 bis 18, wobei das Kohlenstofffaserbündel eine Strangfestigkeit von 4,0 GPa oder mehr aufweist.

20. Herstellungsverfahren für ein mit einem Schlichtungsmittel beschichtetes Kohlenstofffaserbündel, das dazu dient, ein mit einem Schlichtungsmittel beschichtetes Kohlenstofffaserbündel gemäß einem der Ansprüche 1 bis 19 zu produzieren, umfassend einen Schritt, in dem ein Kohlenstofffaserbündel mit einem Schlichtungsmittel, das Polyethylenglykol und/oder ein oberflächenaktives Agens enthält, beschichtet wird, sowie einen nachfolgenden Trocknungsschritt, bei dem das mit Schlichtungsmittel beschichtete Kohlenstofffaserbündel bei 120 °C bis 260 °C getrocknet wird.

**Revendications**

1. Un faisceau de fibres de carbone revêtu d'un agent d'encollage comprenant un faisceau de fibres de carbone revêtu d'un agent d'encollage contenant du polyéthylène glycol et/ou un agent tensioactif et satisfaisant à toutes les exigences (i) à (iii) suivantes :

   (i) l'agent d'encollage appliqué représente 0,15 partie en masse ou plus et 0,80 partie en masse ou moins par rapport à 100 parties en masse du faisceau de fibres de carbone revêtu d'un agent d'encollage,
   (ii) le coefficient de frottement F-F à sec est de 0,39 ou moins, et
   (iii) la quantité de l'agent d'encollage persistant après rinçage pendant 50 secondes dans les conditions spécifiées dans la présente description représente 0,12 parties en masse ou moins par rapport à 100 parties en masse du faisceau de fibres de carbone revêtu d'un agent d'encollage.

2. Un faisceau de fibres de carbone revêtu d'un agent d'encollage selon la revendication 1, dans lequel le coefficient de frottement F-M à l'état humide est de 0,28 ou moins.

3. Un faisceau de fibres de carbone revêtu d'un agent d'encollage selon la revendication 1 ou 2, dans lequel la quantité de l'agent d'encollage persistant après rinçage pendant 25 secondes dans les conditions spécifiées dans la présente description représente 0,12 parties en masse ou moins par rapport à 100 parties en masse du faisceau de fibres de carbone revêtu d'un agent d'encollage.

4. Un faisceau de fibres de carbone revêtu d'un agent d'encollage selon l'une quelconque des revendications 1 à 3, dans lequel la quantité totale de l'agent tensioactif représente 70 parties en masse ou plus par rapport à la quantité totale, c'est-à-dire 100 parties en masse, de l'agent d'encollage.

5. Un faisceau de fibres de carbone revêtu d'un agent d'encollage selon l'une quelconque des revendications 1 à 4, dans lequel la quantité totale de l'agent tensioactif représente 70 parties en masse ou plus par rapport à la quantité totale, c'est-à-dire 100 parties en masse, de l'agent d'encollage, et dans lequel aussi le polyéthylène glycol et/ou l'agent tensioactif non ionique représente 50 parties en masse ou plus par rapport à la quantité totale, c'est-à-dire 100 parties en masse, des agents tensioactifs.

6. Un faisceau de fibres de carbone revêtu d'un agent d'encollage selon l'une quelconque des revendications 1 à 5, dans lequel le polyéthylène glycol et/ou l'agent tensioactif non ionique satisfait à l'une ou l'autre des exigences (vi) et (v) suivantes :

   (vi) HLB est de 15 ou plus et de 20 ou moins, et
   (v) HLB est de 12 ou plus et de moins de 15 tandis que le rapport des groupes hydroxyle d'extrémité de chaîne est de 50 % ou plus.

7. Un faisceau de fibres de carbone revêtu d'un agent d'encollage selon l'une quelconque des revendications 1 à 6, dans lequel le polyéthylène glycol et/ou l'agent tensioactif non ionique ont un poids moléculaire moyen en poids Mw de 300 ou plus et de 5 000 ou moins.

8. Un faisceau de fibres de carbone revêtu d'un agent d'encollage selon l'une quelconque des revendications 1 à 4, dans lequel la quantité totale des agents tensioactifs représente 70 parties en masse ou plus par rapport à la quantité totale, c'est-à-dire 100 parties en masse, de l'agent d'encollage, et dans lequel aussi l'agent tensioactif anionique représente 50 parties en masse ou plus par rapport à la quantité totale, c'est-à-dire 100 parties en masse, des agents tensioactifs.

9. Un faisceau de fibres de carbone revêtu d'un agent d'encollage selon l'une quelconque des revendications 1 à 4, et 8, dans lequel en plus du polyéthylène glycol et/ou de l'agent tensioactif, un composé aliphatique ou alicyclique contenant un groupe hydroxyle lié à un atome de carbone et/ou un composé aliphatique ou alicyclique contenant deux groupes hydroxyle liés à deux atomes de carbone différents sont contenus et représentent 0,1 partie en masse ou plus et 30 parties en masse ou moins par rapport à la quantité totale, c'est-à-dire 100 parties en masse, de l'agent d'encollage.

10. Un faisceau de fibres de carbone revêtu d'un agent d'encollage selon l'une quelconque des revendications 1 à 4, 8, et 9, dans lequel la quantité de l'agent d'encollage appliqué représente 0,30 partie en masse ou plus et 0,45 partie en masse ou moins par rapport à 100 parties en masse des fibres de carbone revêtues d'un agent d'encollage.

11. Un faisceau de fibres de carbone revêtu d'un agent d'encollage selon l'une quelconque des revendications 1 à 4, et 8 à 10, dans lequel le rapport des groupes hydrophiles dans l'anion dans l'agent tensioactif anionique est de 17 % ou plus.

12. Un faisceau de fibres de carbone revêtu d'un agent d'encollage selon l'une quelconque des revendications 1 à 4, et 8 à 11, dans lequel la quantité de l'agent d'encollage persistant après rinçage pendant 50 secondes dans les conditions spécifiées dans la présente description représente 0,08 parties en masse ou moins par rapport à 100 parties en masse du faisceau de fibres de carbone revêtu d'un agent d'encollage.

13. Un faisceau de fibres de carbone revêtu d'un agent d'encollage selon l'une quelconque des revendications 1, 2, et 4, dans lequel la quantité totale des agents tensioactifs représente 70 parties en masse ou plus par rapport à la quantité totale, c'est-à-dire 100 parties en masse, des composants organiques de l'agent d'encollage, et dans lequel aussi l'agent tensioactif anionique représente 50 parties en masse ou plus par rapport à la quantité totale, c'est-à-dire 100 parties en masse, des agents tensioactifs.

14. Un faisceau de fibres de carbone revêtu d'un agent d'encollage selon l'une quelconque des revendications 1 à 4, et 13, dans lequel la quantité de l'agent d'encollage appliqué représente 0,25 parties en masse ou plus et 0,45 parties en masse ou moins par rapport à 100 parties en masse des fibres de carbone revêtues d'un agent d'encollage.

15. Un faisceau de fibres de carbone revêtu d'un agent d'encollage selon l'une quelconque des revendications 4, 13, et 14, dans lequel le groupe alkyle dans l'agent tensioactif amphotère contient 17 atomes de carbone ou moins en moyenne.

16. Un faisceau de fibres de carbone revêtu d'un agent d'encollage selon l'une quelconque des revendications 1, 2, 4, et 13 à 15, dans lequel après une minute d'extraction avec de l'eau distillée, le faisceau de fibres de carbone donne un extrait ayant une absorbance de 0,06 ou plus à 600 nm.

17. Un faisceau de fibres de carbone revêtu d'un agent d'encollage selon l'une quelconque des revendications 1 à 16, dans lequel, lorsque le polyéthylène glycol et/ou l'agent tensioactif sont chauffés dans l'air à une vitesse de 10 °C/min, la fraction de masse résiduelle mesurée au moment où la température atteint 300 °C est de 35 % ou moins.

18. Un faisceau de fibres de carbone revêtu d'un agent d'encollage selon l'une quelconque des revendications 1 à 17, dans lequel, lorsque le polyéthylène glycol et/ou l'agent tensioactif sont chauffés dans l'air à une vitesse de 10 °C/min, la fraction de masse résiduelle mesurée au moment où la température atteint 350 °C est de 30 % ou moins.

19. Un faisceau de fibres de carbone revêtu d'un agent d'encollage selon l'une quelconque des revendications 1 à 18, dans lequel le faisceau de fibres de carbone a une résistance de brin de 4,0 GPa ou plus.

20. Un procédé de production pour un faisceau de fibres de carbone revêtu d'un agent d'encollage conçu pour produire un faisceau de fibres de carbone revêtu d'un agent d'encollage selon l'une quelconque des revendications 1 à 19 comprenant une étape d'encollage d'un faisceau de fibres de carbone avec un agent d'encollage contenant du polyéthylène glycol et/ou un agent tensioactif et une étape de séchage subséquente pour sécher le faisceau de fibres de carbone revêtu d'un agent d'encollage à 120 °C à 260 °C.

Figure 1

Figure 2

**REFERENCES CITED IN THE DESCRIPTION**

**Patent documents cited in the description**

- US 3957716 A
- JP SHO57171767 A
- WO 2006019139 A
- JP 2000054269 A
- JP 6571892 B
- JP 2017137603 A
- JP SHO59144679 A
- JP H06212565 A
- US 5175025 A
- JP 2019210587 A
- US 2019390022 A1

**Non-patent literature cited in the description**

- Shin Kaimen Kasseizai Nyumon (An introduction to Surface Active Agent, New ed.). 1992, 128